# EUROPÄISCHE PATENTSCHRIFT

(11) **EP 2 589 321 B1**
(45) Veröffentlichungstag und Bekanntmachung des Hinweises auf die Patenterteilung: **14.01.2015**
(21) Anmeldenummer: 12155819.1
(22) Anmeldetag: 16.02.2012
(51) Int. Cl.: A47J 31/06

(54) **Kapselsystem sowie entsprechende Vorrichtung und Verfahren zum Bereitstellen von Getränken**
Capsule system, corresponding device and method for preparing drinks
Système de capsule ainsi que dispositif et procédé de préparation de boissons correspondants

(30) Priorität: 02.11.2011 EP 11187448
(43) Veröffentlichungstag der Anmeldung: 08.05.2013
(73) Patentinhaber: Bogatzki, Hans Ulrich, 8049 Zürich (CH)
(72) Erfinder: Bogatzki, Hans Ulrich, 8049 Zürich (CH)
(74) Vertreter: OK pat AG

(56) Entgegenhaltungen:
- US-A1- 2011 117 248
- US-A1- 2011 168 029

## Beschreibung

Die Erfindung betrifft eine Vorrichtung, ein Kapselsystem und ein Verfahren zum Bereitstellen von Getränken, sowie Gebinde zur Verwendung als Teil eines solchen Kapselsystems.

Es wird die Priorität der EP-Anmeldung 11 187 448.3 beansprucht, die am 2.11.2011 im Namen des vorliegenden Anmelders eingereicht wurde.

Seit ca. 20 Jahren hat sich ein starker Trend bei der Kaffeezubereitung hin zur Einfachheit und Bequemlichkeit entwickelt. Dies liegt nicht zuletzt auch an den generell veränderten Ess- und Lebensgewohnheiten, sowie an der Marktmacht weltweit tätiger Großkonzerne.

Daraus resultierte bei der Kaffeezubereitung die sogenannte Kapselphilosophie, die sicher den ein oder anderen Vorteil bietet. Dabei ging leider vergessen, dass man zur Entstehungszeit dieses Trends wohl davon ausgegangen ist, dass sowohl die Rohstoffe als auch die Energieressourcen in scheinbar ausreichender Form zur Verfügung stünden. Die Einschätzung der Situation hat sich in letzter Zeit jedoch gründlich geändert. Nicht zuletzt werden die Lebensbedingungen in den Erzeugerländern, wie zum Beispiel beim Kaffeeanbau und -handel, vermehrt von Umweltorganisationen kontrolliert und überwacht. Vergleichsweise dramatisch fällt heute eine Neubeurteilung des Energieaufwands bei der Kapselherstellung, dem Vertrieb und anschliessenden Recycling durch das Umdenken in Bezug auf limitierte fossile Energieressourcen und auf teure regenerative Energiequellen aus.

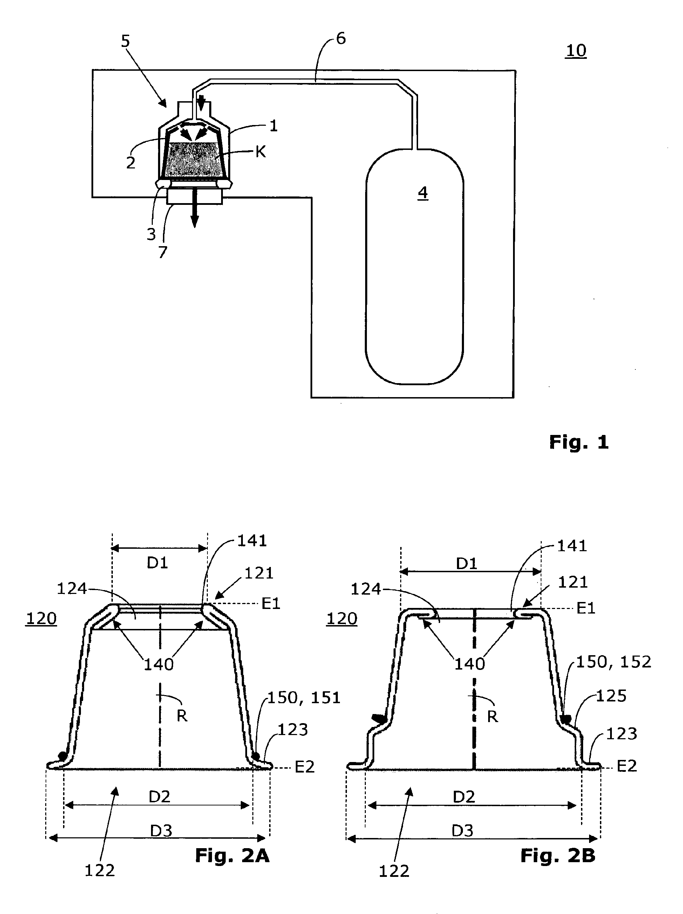

In Fig. 1 ist eine schematische Ansicht einer vorbekannten Kaffeemaschine 10 mit einer Kaffeekapsel 2 gezeigt, die mit Kaffeepulver K befüllt ist und in einem entsprechenden Aufnahmebereich 5 der Maschine 10 sitzt. Heißes Wasser wird aus einem Tank 4 entnommen und über eine Leitung 6 typischerweise von oben her mit Druck in das Innere der Kaffeekapsel 2 gepresst. Die Kaffeekapsel 2 sitzt vorzugsweise in einer Kapselaufnahme 1 (auch Kapselkäfig genannt), die die Kaffeekapsel 2 umgreift und ihr einen festen Sitz gibt. Eine Aluminiumfolie, die die Kaffeekapsel 2 verschließt, wird auf ein Siebelement 3 gepresst und dabei perforiert. Heißes Wasser dringt durch ein Loch, das im konischen Boden der Kaffeekapsel 2 erzeugt wird in das Innere der Kaffeekapsel 2 ein, durchdringt das Kaffeepulver K und verlässt die Kapsel 2 durch die erwähnte Perforierung, bevor durch einen Auslass 7 das Kaffeegetränk abgegeben wird, wie in Fig. 1 durch zwei abwärts weisende Pfeile angedeutet.

Es gibt zahlreiche kapsel-basierte Ansätze, die sich im Markt mehr oder weniger behaupten.

Es ist die vornehmliche Aufgabe der vorliegenden Erfindung, sowohl den Rohstoff- wie auch den Energiebedarf den jetzigen Gegebenheiten anzupassen. Es kann nicht länger angehen, dass für eine Tasse Kaffee neben Unmengen an Wasser auch noch wertvolle Rohstoffe, wie Kunststoff und Aluminium für die Verpackung verschwendet werden. Nicht nachvollziehbar ist das Argument der Hersteller von Plastikkaffeekapseln, dass die Verbrennungsanlagen dieses Material benötigten würden, damit überhaupt eine entsprechende Feuerkraft in diesen Anlagen vorherrsche. Ähnlich überdenkenswert ist die Argumentation in Bezug auf die Verwendung von Aluminium. Durch ein sogenanntes Recyceln wird suggeriert, dass die Kapseln aus Aluminium umweltfreundlich seien. Dabei geht vergessen, dass durch die nachgelagerten Prozess- und Reinigungsschritte sowie auch durch den "Kapseltourismus" ein Mehrfaches an Energie eingesetzt werden muss, als die Herstellung einer neuen Kapsel kostet.

Bisher nicht berücksichtigt werden auch die hygienischen und gesundheitsgefährdenden Aspekte, da gebrauchte Kapseln die Tendenz haben schädlichen Schimmelbefall zu zeigen. Auch nicht berücksichtigt werden medizinische Aspekte. Es gibt Untersuchungen, die Hinweise darauf enthalten, dass es zwischen Aluminium, das sich im menschlichen Körper angesammelt hat, und einer späteren Alzheimer-Erkrankung einen Zusammenhang geben könnte.

Es wird im Moment auch nicht gebührend berücksichtigt, dass Kapsellösungen, die für sich in Anspruch nehmen umweltverträglich zu sein, da sie organischen, biologisch abbaubaren Kunststoff verwenden, diesem Anspruch nicht gerecht werden. Ein Zerlegen solcher Kapseln hat gezeigt, dass diese nicht nur den abbaubaren Kunststoff umfassen, sondern im Inneren andere Plastikkomponenten und metallische oder metallisch beschichtete Teile umfassen.

Neben den genannten Nachteilen haben die Kapsel-basierten Systeme jedoch auch Vorteile. Unter anderem verbrauchen die Kapselmaschinen weniger Energie als andere Kaffeemaschinen. Ausserdem wird Kaffee nur auf Bedarf in einer Einzelportion gebraut, statt Kaffeekannen auf Vorrat zu füllen und dann den verbleibenden kalten Kaffee zu entsorgen. Weiterhin kann Kapselkaffee, wenn die Kapselmaschine richtig gehandhabt und gereinigt wird, hygienischer sein als andere Lösungen. Leider schliesst sich hier jedoch wieder der Kreis zu den erwähnten Nachteilen, da bisher vor allem das Lagern und Beseitigen der zum Teil feuchten und schimmligen Kapseln nach dem Gebrauch nicht mit der notwendigen Vorsicht erfolgt. Entsprechende Warnhinweise der Hersteller von Kapseln fehlen bisher ganz.

Bei der Zubereitung eines Kaffeegetränks, insbesondere eines Espresso, wird neben der hohen Wassertemperatur auch ein Druck von ca. 19 bar benötigt. Daraus resultiert, dass die im Markt erhältlichen Kaffeekapseln diesen Druck aushalten müssen. Die bisherigen Kaffeekapseln sind aufwendig ausgelegt und umfangreich getestet worden, da sie neben dem erwähnt Druck eine Reihe von anderen Aspekten und Kriterien erfüllen müssen, wie Lebensmittelechtheit, Geruchsbarriere, Dichtigkeit gegen Feuchtigkeit, Lager- und Transportierbarkeit, usw.

Aus dem Dokument US 2011/0117248 A1 ist ein Materialhalter bekannt, der zur Einmal-Zubereitung von Kaffee geeignet ist. Es kommt eine Filterpapiertopf zum Einsatz, der einen Deckel und einen topfartigen Behälter umfasst. Der topfartigen Behälter wird aus Filterpapier geformt, indem Falten in die Wandung eingebracht und ein ober umlaufender Rand ausgebildet werden. Der erwähnte Deckel wird über den topfartigen Behälter gefaltet. Dieser Filterpapiertopf ist dazu ausgelegt Pulver aufzunehmen um dann in eine (Kaffee-) Maschine eingebracht zu werden. Aus dem Dokument US-A-2011/0168029 ist eine Vorrichtung nach dem Oberbegriff des unabhängigen Anspruchs 1 bekannt. An den beschriebenen Nachteilen und Problemen, die mit bekannten Kapselansätzen verbunden sind, setzt die Erfindung an.

Gemäss Erfindung kommt ein Mantel aus Aluminium, rostfreiem Stahl bzw. aus Glasfaser-verstärktem Kunststoff oder anderen geeigneten Materialien zum Einsatz, der als Adapter einerseits zwischen dem Aufnahmebereich der Kaffeemaschine und andererseits einem Gebinde dient, das das Pulver (vorzugsweise ein Kaffeepulver) umschliesst.

Die Erfindung geht hier einen anderen Weg als denjenigen, der von den bekannten Systemen vorgegeben wurde, die allesamt auf ein geschlossenes Kapselsystem setzen.

Untersuchungen haben ergeben, dass man einen Mantel so gestalten kann, dass er ähnliche Eigenschaften beim Verwenden in den bekannten Kapselmaschinen zeigt wie die bekannten Kapseln. Um die bisherigen Wegwerfkapseln ersetzen zu können, weist der Mantel der Erfindung mindestens ein umlaufendes Dichtelement auf, das so gestaltet und am Mantel positioniert ist, dass kein Störwasser an einem mit Pulver gefüllten Gebinde vorbei aus der Maschine austreten kann.

Je nach Ausführungsform des Mantels dient ein umlaufender Kragen im Bodenbereich des Mantels als umlaufendes Dichtelement und/oder es dient eine umlaufende Dichtung (aus lebensmitteltauglichem Material) an der Aussenseite des Mantels als umlaufendes Dichtelement.

Besonders bevorzugt sind Ausführungsformen, die sowohl einen umlaufenden Kragen im Bodenbereich des Mantels als auch eine umlaufende Dichtung an der Aussenseite des Mantels aufweisen, da bei solchen Ausführungsformen wenig bis gar kein Störwasser an dem mit Pulver gefüllten Gebinde vorbei aus der Maschine austritt.

Der umlaufende Kragen im Bodenbereich des Mantels dient im Wesentlichen als Anschlag für das Gebinde, damit das Gebinde nicht zu weit eingeschoben werden kann und dann durch eine der Öffnungen des Mantels zu weit heraus ragt.

Der erfindungsgemässe Mantel ist bewusst beidseitig offen ausgeführt, um das Einbringen eines mit Pulver befüllten Gebindes einfach zu gestalten und um nach dem Gebrauch das gebrauchte Gebinde problemlos entnehmen zu können. Ausserdem hat die beidseitig offene Ausführung des Mantels den Vorteil, dass dieser problemlos gereinigt werden kann und schnell trocknet. Die hier vorgeschlagene Lösung geht einen anderen Weg als die bisher bekannten Kapsellösungen, die allesamt auf komplett (beidseitig) geschlossenen oder mindestens einseitig geschlossene oder verschliessbare Lösungen setzen.

Der beidseitig offene Mantel weist eine erste bodenseitige Öffnung in einer ersten Horizontalebene und eine zweite, gegenüberliegende Öffnung in einer zweiten Horizontalebene auf. Die Öffnung in der zweiten Horizontalebene ist deutlich grösser als die Öffnung in der ersten Horizontalebene.

Das Gebinde kann gemäss Erfindung aus wesentlich dünneren und somit auch umweltschonenderen Materialien bestehen, als die bisherigen, in sich stabilen und multifunktionalen Kaffeekapseln. Der erforderliche Materialeinsatz reduziert sich dadurch deutlich.

Die Erfindung basiert mit anderen Worten ausgedrückt auf der Bereitstellung und Verwendung einer modularen, bzw. zweiteiligen Kapsel, die hier auch als zusammengesetzte Kapsel bezeichnet wird, da sie vor dem Einbringen in die Maschine zusammengesetzt wird, indem ein Gebinde, das (Kaffee-)Pulver umschliesst, in einen Aufnahmebereich des erwähnten Mantels eingebracht wird.

Das Einbringen des Gebindes in den Mantel geschieht so, dass das Gebinde aufgrund von Reibung und aufgrund der Deformierbarkeit des Gebindes in dem Mantel festsitzt.

Der Mantel übernimmt bei allen Ausführungsformen der Erfindung mindestens die Funktion der mechanischen Stabilisierung und die Funktion eines Adapters, der beim Einbringen in die Kaffeemaschine mechanisch mit den Elementen der Maschine im Aufnahmebereich in Wechselwirkung tritt. Um die Adapterfunktion zu erfüllen, hat der Mantel eine Form und einen Aussendurchmesser, der an die Form und den Innendurchmesser des Aufnahmebereichs der Kaffeemaschine angepasst ist.

Vorzugsweise hat der Mantel die Form einer konventionellen Kapsel und einen Aussendurchmesser, der um einige Prozent kleiner ist als der Aussendurchmesser der konventionellen Kapsel.

Im offenen Bodenbereich ermöglicht der Mantel das Herstellen eines strömungstechnischen Kontakts mit einer Heisswasserversorgung der Maschine.

Im gegenüberliegenden Bereich hat der Mantel eine Öffnung, um das Herstellen eines innigen direkten Kontakts zwischen einem Siebelement der Maschine und dem Gebinde zu ermöglichen. Die zusammengesetzte Kapsel kann auch in entgegengesetzter Richtung vom Wasser durchströmt werden.

Es kann jedoch auch ein Abstand zwischen dem Siebelement der Maschine und dem Gebinde vorgesehen sein, was nachweislich zu einer Verbesserung der Schaumbildung führt.
Bei dem Einsetzen des Gebindes in den Mantel ragt das Gebinde etwas durch eine erste Öffnung des Mantels hindurch und bildet vorzugsweise einen abgesetzten Bodenbereich.

Ein Teil des Gebindes erstreckt sich bei der zusammengesetzten Kapsel durch eine erste Öffnung des Mantels hindurch.

Vorzugsweise ist die erste Öffnung etwas gegenüber den Bodenbereich des Mantels zurückversetzt, um zu verhindern, dass das Gebinde sich zu weit ins Innere der Maschine erstreckt.

Vorzugsweise tritt der Mantel beim Einbringen in die Vorrichtung mechanisch mit den Elementen der Vorrichtung im Aufnahmebereich in Wechselwirkung tritt und es wird ein Hohlraum gebildet durch den hindurch Wasser in das Gebinde gelangen kann.

Bei denjenigen Ausführungsformen, die eine umlaufende Dichtung an der Aussenseite des Mantels aufweisen, ist es nicht so wichtig, dass der Mantel die genaue Form und Dimension der zu ersetzenden Kapsel aufweist. Die umlaufende Dichtung an der Aussenseite des Mantels kann kleine Differenzen und Toleranzen ausgleichen und bietet trotzdem eine dichte Verbindung zwischen dem Mantel und dem Aufnahmebereich der Maschine. Ausserdem hat die umlaufende Dichtung an der Aussenseite des Mantels den Vorteil, dass selbst bei Maschinen, deren Kapselkäfig oder Siebelement einen verzahnten oder wellenförmigen Rand aufweist, eine dichte Verbindung möglich ist.

Vorzugsweise ist der Mantel der Erfindung derart stabil ausgebildet (Eigenfestigkeit gegen Verformung genannt), dass er häufig eingesetzt werden kann ohne Materialermüdung zu zeigen. Ausserdem weist er vorzugsweise eine harte Oberfläche auf, damit der Mantel nicht abgenutzt wird. Ausserdem hat die Eigenfestigkeit den Vorteil, dass der Mantel beim Einsetzen, Entnehmen oder Auswerfen keinen Schaden nimmt. Dies ist vor allem bei neueren Maschinen wichtig, die eine Kapsel zangenartig greifen oder halten. Ein Teil der auf dem Markt erhältlichen mehrfach verwendbaren Kapseln wird dabei beschädigt, was bei Einmal-Kapseln kein ernsthaftes Problem darstellt. Der erfindungsgemässe Mantel trägt selbst beim häufigen beim Einsatz in solchen Maschinen jedoch keinerlei ernsthafte Schäden davon.

Ausserdem ist der erfindungsgemässe Mantel spülmaschinen- und abriebfest, was bedeutet, dass beim sachgemässen Gebrauch keine Spuren des Mantelmaterials über das Getränk in den menschlichen Körper gelangen. Aus diesem Grunde ist die Oberfläche des Mantelmaterials vorzugsweise bei allen Ausführungsformen passiviert, was bedeutet, dass die Oberfläche beschichtet (z.B. mit Siliziumnitrid oder Siliziumcarbid) oder oberflächengehärtet ist. Die aus Aluminium oder einer Aluminiumlegierung gefertigten Mäntel sind vorzugsweise eloxiert oder emataliert, um eine besonders harte, widerstandsfähige und lebensmittelverträgliche Oberfläche zu schaffen. Die aus rostfreiem Stahl gefertigten Mäntel sind vorzugsweise elektropoliert, um eine besonders harte, widerstandsfähige und lebensmittelverträgliche Oberfläche zu schaffen.

Das Gebinde übernimmt bei allen Ausführungsformen der Erfindung mindestens die Funktion der Portionierung einer geeigneten Menge des (Kaffee-)Pulvers und es ermöglicht beim Zusammenbringen des Gebindes mit dem Siebelement der Maschine entweder ein kontrolliertes Öffnen eines Bereichs des Gebindes oder ein Hindurchströmen des Wassers durch das Pulver, das Gebinde im Bereich des Siebelements und das Siebelement ohne das Gebinde zu perforieren.

Es werden diejenigen Ausführungsformen bevorzugt, bei denen das Gebinde weder beim Einbringen der Funktionsgruppe aus Mantel und Gebinde (hier zusammengesetzte Kapsel genannt) in die Maschine noch beim Hindurchlassen von Wasser Schaden nimmt. D.h. das Gebinde bleibt in diesen Fällen und bei diesen Ausführungsformen in Takt.

Bei allen anderen Ausführungsformen wird beim kontrollierten Öffnen eine Reihe von kleinen Öffnungen (hier Perforierungen genannt) in einem (Deckel-)Bereich des Gebindes erzeugt.

Beim Austreten des (Kaffee-)Getränks aus dem Gebinde ergibt sich am Gebinde und/oder an den Perforierungen und/oder am Sieb- oder Netzelement eine Verwirbelung und Schaumbildung.

Das Gebinde der Erfindung ist mindestens teilweise wasserdurchlässig. Bei Gebinden aus Filterpapier ist vorzugsweise das gesamte Gebinde wasserdurchlässig. Andere Gebinde der Erfindung haben Bereiche (Zonen), die wasserdurchlässig ausgeführt sind. Auch ein Gebinde aus Filterpapier kann nur teilweise wasserdurchlässig ausgeführt sein.

Gemäss Erfindung kommt eine Vorrichtung zum Einsatz, die zum Bereitstellen eines (Kaffee-)Getränks unter Einsatz einer (Kaffee-)Kapsel ausgelegt ist, die mit (Kaffee-)Pulver befüllt ist. Die Vorrichtung weist einen Bereich zum Aufnehmen der Kapsel, eine Heisswasserversorgung und einen Auslass für das Getränk auf. Die Kapsel setzt sich aus einem Mantel und einem separaten Gebinde zusammen, wobei der Mantel wieder verwendbar ist und als Adapter zur Aufnahme des Gebindes und zum Einbringen in den Bereich der Vorrichtung ausgelegt ist. Das Gebinde ist mit dem Pulver befüllt und umschliesst das Pulver. Das Gebinde ist in den Mantel einbringbar, bevor der Mantel zusammen mit dem Gebinde in dem Bereich der Vorrichtung aufgenommen wird. Nach dem Gebrauch kann das Gebinde einfach aus dem Mantel entnommen und z.B. entsorgt werden.

Die Erfindung hat den Vorteil, dass vor allem bei manuell oder semi-manuell befüllten Gebinden das Kaffeepulver vorverdichtet werden kann. Dieser Schritt ist für das Brühergebnis wichtig und wird von jedem Barista bei konventionellen Espressomaschinen von Hand und mit viel Können ausgeführt. Aber auch die vom Hersteller oder Befüller befüllten Gebinde der Erfindung können beim Einbringen ins Innere des Mantels vorverdichtet werden.
Gemäss Erfindung kann der Benutzer des Mantels und der Gebinde wichtige Faktoren wie Kaffeemenge und Anpressdruck (beim optionalen Vorverdichten) selbst bestimmen.

Mit der Erfindung können verschiedene Heiss- und Kaltgetränke sowie trinkbare Suppen zubereitet werden.

Es geht hier um eine schonende Verwendung der vorhandenen Ressourcen und um einen selbstbestimmten Gebrauch der auf dem Markt verfügbaren Kaffeesorten. Statt ein geschlossenes Kapselsystem zu unterstützen, sollte der Weg für ein offenes Kapselsystem geebnet werden. Damit wird die Dominanz einiger Weniger aufgebrochen und es können andere, vor allem auch kleine lokale Anbieter, den Markt bedienen.

Die erfindungsgemässe Vorrichtung wird nun an Hand von schematischen, den Umfang der Erfindung nicht beschränkenden Zeichnungen von beispielhaften Ausführungsformen im Detail erläutert.
- Fig. 1: zeigt eine beispielhafte vorbekannte Vorrichtung mit einer konventionellen, einstückigen Kaffeekapsel in einer schematischen Transparentansicht;
- Fig. 2A: zeigt einen ersten Mantel der Erfindung in einer Schnittansicht;
- Fig. 2B: zeigt einen zweiten Mantel der Erfindung in einer Schnittansicht;
- Fig. 2C: zeigt einen dritten Mantel der Erfindung in einer Schnittansicht;
- Fig. 2D: zeigt einen vierten Mantel der Erfindung in einer Schnittansicht;
- Fig. 2E: zeigt einen fünften Mantel der Erfindung in einer Schnittansicht, wobei dieser Mantel dem Mantel nach Fig.2C ähnlich ist;
- Fig. 2F: zeigt eine Variation der Ausführungsform nach Fig. 2A;
- Fig. 2G: zeigt eine Variation der Ausführungsform nach Fig. 2B;
- Fig. 2H: zeigt einen sechsten Mantel der Erfindung in einer Schnittansicht;
- Fig. 2I: zeigt einen siebten Mantel der Erfindung in einer Schnittansicht;
- Fig. 2J: zeigt den oberen Bereich eines achten Mantels der Erfindung in einer Perspektivansicht;
- Fig. 2K: zeigt den oberen Bereich eines neunten Mantels der Erfindung in einer Perspektivansicht;
- Fig. 3A: zeigt ein erstes vorgeformtes Gebinde der Erfindung in einer Schnittansicht, wobei es sich vorzugsweise um ein Gebinde aus Filterpapier handelt, das eine gewisse Formhaltigkeit aufweist;
- Fig. 3B: zeigt ein zweites vorgeformtes Gebinde der Erfindung in einer Seitenansicht, wobei es sich vorzugsweise um ein Gebinde aus Filterpapier handelt, das eine gewisse Formhaltigkeit aufweist;
- Fig. 3C: zeigt ein drittes vorgeformtes Gebinde der Erfindung in einer Seitenansicht, wobei es sich vorzugsweise um ein Gebinde aus Filterpapier handelt, das eine gewisse Formhaltigkeit aufweist;
- Fig. 4A: zeigt eine erste zusammengesetzte Kapsel in einer Schnittansicht, die sich aus dem ersten Mantel nach Fig. 2A und dem ersten vorgeformten Gebinde nach Fig. 3A zusammensetzt, wobei die zusammengesetzte Kapsel hier von einem stark schematisierten Kapselkäfig umgeben ist;
- Fig. 4B: zeigt das Gebinde nach Fig. 4A nach dem Gebrauch;
- Fig. 5A: zeigt ein erstes befüllbares, flaches Gebinde der Erfindung in einer Seitenansicht, wobei es sich vorzugsweise um ein Gebinde aus Filterpapier handelt;
- Fig. 5B: zeigt ein zweites befüllbares, flaches Gebinde der Erfindung in einer Seitenansicht, wobei es sich vorzugsweise um ein Gebinde aus Filterpapier handelt;
- Fig. 5C: zeigt ein erstes rundum verschlossenes, befülltes, flaches Gebinde der Erfindung in einer Seitenansicht, wobei es sich vorzugsweise um ein Gebinde aus Filterpapier handelt;
- Fig. 5D: zeigt ein zweites rundum verschlossenes, befülltes, flaches Gebinde der Erfindung in einer Seitenansicht, wobei es sich vorzugsweise um ein Gebinde aus Filterpapier handelt;
- Fig. 6A: zeigt eine zweite zusammengesetzte Kapsel in einer schematischen Schnittansicht, die sich aus dem Mantel nach Fig. 2E und dem ersten befüllbaren, flachen Gebinde nach Fig. 5A zusammensetzt;
- Fig. 6B: zeigt eine dritte zusammengesetzte Kapsel in einer Schnittansicht, die sich aus dem Mantel nach Fig. 2D und dem ersten rundum verschlossenen, befüllten, flachen Gebinde nach Fig. 5C zusammensetzt;
- Fig. 7: zeigt eine beispielhafte Vorrichtung mit einer erfindungsgemässen, zusammengesetzten Kapsel in einer schematischen Transparentansicht;
- Fig. 8A: zeigt einen ersten Verfahrensschritt zum manuellen Befüllen eines Gebindes nach Fig. 5B, wobei ein Zapfen zum Offenhalten des Gebindes bereit gestellt wird;
- Fig. 8B: zeigt einen zweiten Verfahrensschritt, wobei der Zapfen zum Offenhalten des Gebindes in das Innere des Gebindes eingeschoben wurde;
- Fig. 8C: zeigt einen dritten Verfahrensschritt, wobei das Gebinde samt Zapfen in das Innere eines Mantels nach Fig. 2B eingeschoben wurde;
- Fig. 8D: zeigt einen vierten Verfahrensschritt, wobei der Mantel samt Gebinde vom Zapfen abgenommen und gedreht wurde;
- Fig. 8E: zeigt einen fünften Verfahrensschritt, wobei das Gebinde mit Pulver befüllt wurde;
- Fig. 8F: zeigt einen sechsten Verfahrensschritt, wobei das Pulver im Gebinde unter Einsatz eines Stempels vorverdichtet wurde;
- Fig. 8G: zeigt einen siebten Verfahrensschritt, wobei das Gebinde verschlossen wurde;
- Fig. 8H: zeigt einen achten Verfahrensschritt, wobei die zusammengesetzte Kapsel in eine Vorrichtung eingesetzt wurde;
- Fig. 8I: zeigt einen weiteren Verfahrensschritt, wobei nach Gebrauch das Gebinde samt Pulver aus der Vorrichtung entnommen wurde;
- Fig. 9A: zeigt einen Verfahrensschritt, bei dem eine zusammengesetzte Kapsel der Erfindung in einer Vorrichtung in umgekehrter Richtung verwendet wird;
- Fig. 9B: zeigt eine schematisierte Darstellung eines Auslasses bei dem ein Teil des Auslasses im Schnitt dargestellt ist;
- Fig. 9C: zeigt eine schematisierte Darstellung eines weiteren Auslasses bei dem ein Teil des Auslasses im Schnitt dargestellt ist;
- Fig. 10A: zeigt den oberen Bereich des achten Mantels zusammen mit einem innenliegenden Gebinde der Erfindung in einer Perspektivansicht, wobei zu erkennen ist, wie Wasser zugeführt wird;
- Fig. 10B: zeigt einen Bereich eines weiteren Mantels zusammen mit einem innenliegenden Gebinde der Erfindung in einer Perspektivansicht, wobei zu erkennen ist, wie Wasser, respektive ein Getränk austritt.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Einzelteile der Erfindung. Grundsätzlich lassen sich die beschriebenen Einzelteile der verschiedenen Ausführungsformen miteinander kombinieren, respektive die Einzelteile einzelner Ausführungsformen lassen sich durch die Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Einzelteile zu ermöglichen.

Bevor weitere Details der Erfindung beschrieben werden, folgt eine Definition derjenigen Begriffe und Grundelemente, die von besonderer Bedeutung für das Verständnis der Erfindung sind.

Der Begriff Eigenfestigkeit wird hier verwendet, um zu beschreiben, dass der Mantel 120 bei einer normalen Verwendung seine 3-dimensionale Form beibehält. Der Mantel 120 gemäss Erfindung kann nicht von Hand parallel zur Symmetrieachse R zusammengestaucht werden. Ein Eindrücken in einer Richtung senkrecht zur Symmetrieachse R ist nicht oder nur in kleinem Masse möglich.

Das Gebinde 130 gemäss Erfindung hat eine gewisse Formhaltigkeit, besitzt aber keine oder nur eine geringe Eigenstabilität. Die vorgeformten Gebinde 130 können z.B. problemlos in einer Richtung senkrecht zur Symmetrieachse R zusammen gedrückt werden. Die flachen Gebinde 130 können in alle Richtungen zusammen gedrückt werden, solange sie nicht zu prall mit Pulver K befüllt und verschlossen sind.

Als Pulver K wird hier jegliches Pulver angesehen, das zum Zubereiten von Getränken oder trinkbaren Suppengerichten geeignet ist. Primär geht es hier jedoch um Kaffeepulver.

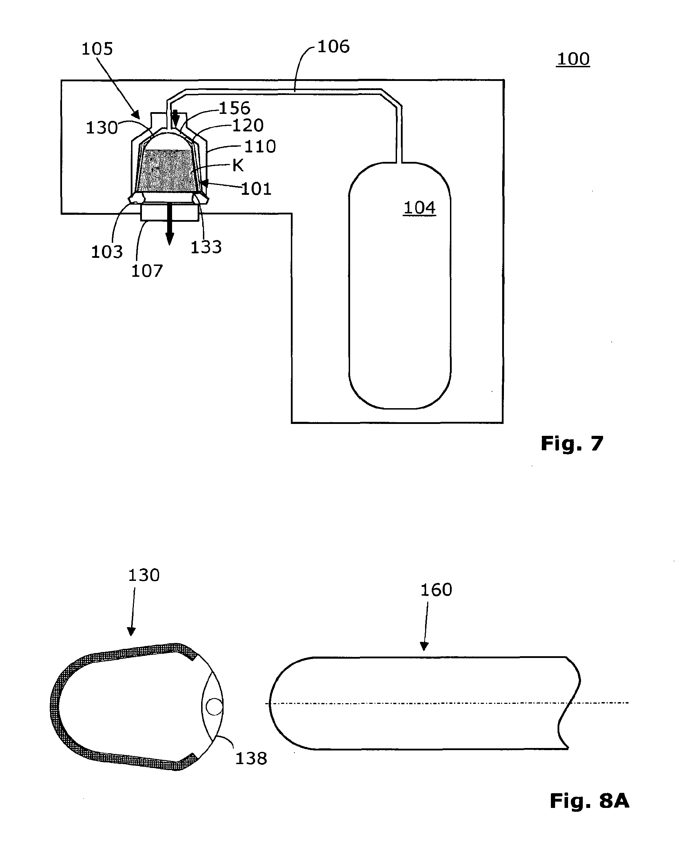

Gemäss Erfindung kommt ein Mantel 120 zum Einsatz. Mehrere beispielhafte Mäntel 120 sind in den Figuren 2A bis 2K gezeigt. Der Mantel 120 übernimmt bei allen Ausführungsformen der Erfindung mindestens die Funktion der mechanischen Stabilisierung und die Funktion eines Adapters, der beim Einbringen in die (Kaffee-)Maschine (hier allgemein Vorrichtung 100 genannt) mechanisch mit den Elementen der Vorrichtung 100 im Aufnahmebereich 105 in Wechselwirkung tritt. Daher weist der Mantel 120 stets Eigenfestigkeit auf. Um die Adapterfunktion zu erfüllen, hat der Mantel 120 eine Form und einen Aussendurchmesser, der mindestens teilweise an die Form und den Innendurchmesser des Aufnahmebereichs 105 der Vorrichtung 100 angepasst ist. Dabei ist die Vorrichtung 100 in Fig. 7 als stark schematisiertes Beispiel für die Vielzahl an verschiedenen Maschinen zu verstehen. In Fig. 7 ist eine Maschinenkonstellation oder -konfiguration gezeigt, bei der das Wasser in der gezeigten Richtung durch die zusammengesetzte Kapsel 101 geführt wird. Die zusammengesetzte Kapsel 101 kann aber auch je nach Maschinenkonstellation oder -konfiguration in der entgegengesetzten Richtung vom Wasser durchströmt werden. Das Wirkprinzip der Erfindung ist in diesem umgekehrten Fall das gleiche.

Vorzugsweise hat der Mantel 120 im Wesentlichen die Form und den Aussendurchmesser einer konventionellen Kaffeekapsel 2. Im Bodenbereich 121 ermöglicht der Mantel 120 das Herstellen eines strömungstechnischen Kontakts z.B. mit einer Heisswasserversorgung 104, 106 der Vorrichtung 100. Die Heisswasserversorgung kann z.B. einen Tank 104 und eine Verbindungsleitung 106 umfassen. Im gegenüberliegenden oberen Bereich hat der Mantel 120 eine Öffnung 122, um das Herstellen eines Kontakts zwischen einem Siebelement 103 oder einem gleichwirkenden Element der Vorrichtung 100 und dem Gebinde 130 zu ermöglichen. Das Gebinde 130 muss nicht zwingend mit dem Siebelement 103 in direkten, innigen Kontakt treten. Es kann je nach Ausführungsform auch ein Abstand zwischen Gebinde 130 und dem Siebelement 103 vorgesehen sein.

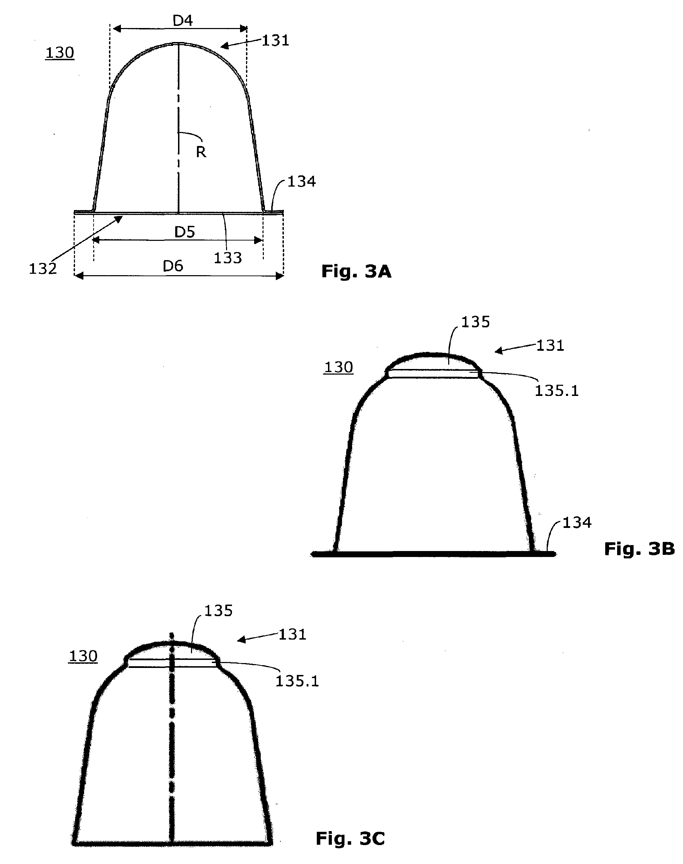

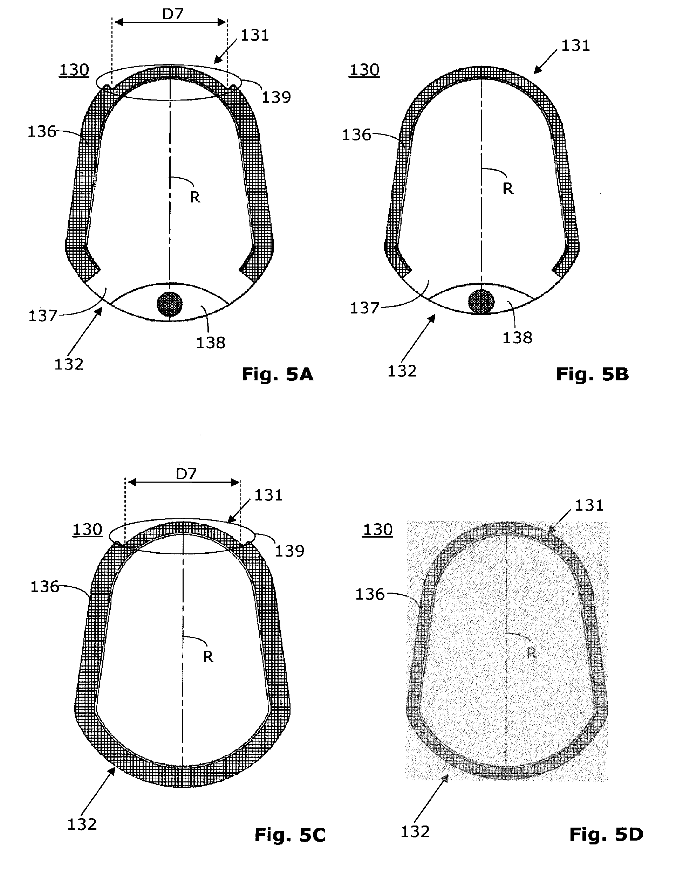

Das Gebinde 130 übernimmt bei allen Ausführungsformen der Erfindung mindestens die Funktion der Portionierung einer geeigneten Menge des (Kaffee-) Pulvers K und es ermöglicht beim Zusammenbringen des Gebindes 130 mit dem Siebelement 103 entweder ein kontrolliertes Öffnen eines Bereichs des Gebindes 130 oder ein Durchströmen des entsprechenden Bereichs des Gebindes 130 und des direkt benachbarten oder beabstandeten Siebelements 103. Mehrere beispielhafte Gebinde 130 sind in den Figuren 3A, 3B, 3C sowie 5A bis 5D gezeigt. Der Mantel 120 weist mindestens ein umlaufendes Dichtelement 140 und/oder 150 auf, die/das so gestaltet und am Mantel 120 positioniert sind/ist, dass kein Störwasser an dem mit Pulver K gefüllten Gebinde 130 oder dem Mantel 120 vorbei aus der Vorrichtung 100 austritt.

Vorzugsweise ist bei allen Ausführungsformen des Mantels 120 ein umlaufendes Dichtelement 140 im Bodenbereich 121 angeordnet.

In Fig. 2A ist ein erster Mantel 120 der Erfindung in einer Schnittansicht gezeigt. Die Ausführungsform nach Fig. 2A zeichnet sich dadurch aus, dass sie die Form eines Kegelstumpfs hat, der drei ringförmig um die Symmetrieachse R herum angeordnete Wandabschnitte mit unterschiedlicher Steigung aufweist. In Fig. 2A von oben nach unten betrachtet, weist der Mantel 120 eine erste Horizontalebene E1 auf, die hier komplett von der bodenseitigen Öffnung 124 eingenommen wird (der Durchmesser der bodenseitigen Öffnung 124 entspricht fast dem Durchmesser D1). Dann folgt eine erster ringförmiger Wandabschnitt mit geringer Steigung, ein zweiter ringförmiger Wandabschnitt mit grösserer Steigung und ein dritter ringförmiger Wandabschnitt mit geringerer Steigung. Der dritte ringförmige Wandabschnitt bildet den umlaufenden Kragen 123. Der umlaufende Kragen 123 liegt mindestens teilweise in einer zweiten Horizontalebene E2.

Die Ausführungsform nach Fig. 2A zeichnet sich dadurch aus, dass im Bereich einer bodenseitigen Öffnung 124 ein Teil des schräg angestellten Lochrandes nach innen umgelegt (z.B. durch Umbiegen oder -falzen) ist. Der umgelegte Lochrand dient hauptsächlich dazu, dass einerseits der Bodenbereich 131 des Gebindes 130 im Bereich des umlaufenden Dichtelements 140 dicht innen gegen gepresst werden kann. Andererseits bietet das umlaufende Dichtelement 140 in der in Fig. 2A gezeigten Ausbildung eine Kante 141 mit einem Radius, der das Material des Gebindes 130 nicht beschädigt.

Die Ausführungsform nach Fig. 2A zeichnet sich dadurch aus, dass im Aussenbereich des Mantels 120 ein umlaufenden Dichtelement 150 vorgesehen ist. Hier dient ein elastischer Dichtungsring 151 (z.B. eine Gummidichtung) als umlaufendes Dichtelement 150. Das umlaufende Dichtelement 150 kann z.B. im Bereich des umlaufenden Kragens 123 platziert werden, wie gezeigt.

Der erste Mantel 120 nach Fig. 2A hat in etwa die Aussenform und -dimension der Kaffeekapseln eines ersten Herstellers.

Der Mantel 120 nach Fig. 2A kann mit dem umgelegten Lochrand, der als umlaufendes Dichtelement 140 dient, und/oder mit dem elastischen Dichtungsring 151 als mantelseitiges, umlaufendes Dichtelement 150 ausgestattet sein.

Der Mantel 120 hat vorzugsweise bei allen Ausführungsformen eine konische Form und verjüngt sich in den gezeigten Darstellungen der Figuren 2A bis 2K von unten nach oben. Im Bodenbereich 121 hat der Mantel 120 somit einen kleineren Durchmesser D1 als im Bereich des Kragens 123. Der grösste Durchmesser D3 ergibt sich im Bereich der Horizontalebene E2.

Der Mantel 120 ist bei allen Ausführungsformen wieder verwendbar auslegt. Ausserdem dient der Mantel 120 als Adapter zur Aufnahme des separaten Gebindes 130 und zum Einbringen in den Bereich 105 der Vorrichtung 100.

Der Mantel 120 ist bei allen Ausführungsformen rotationssymmetrisch zur Zentralachse R (Symmetrieachse) ausgelegt.

Der Mantel 120 ist bei allen Ausführungsformen vorzugsweise topf-, napf- oder tassenförmig ausgeführt und durchgängig innen hohl.

Der Mantel 120 ist bei allen Ausführungsformen vorzugsweise kegelstumpfförmig ausgeführt und durchgängig innen hohl. Der Mantel 120 ist bei allen Ausführungsformen in sich formstabil (auch eigenfest genannt). Zu diesem Zweck wird er aus einem geeigneten formstabilen Material gefertigt. Besonders geeignet sind Mäntel 120 aus (Edel-) Stahl, insbesondere rostfreiem Stahl, Aluminium, gesintertem Material, oder aus Glasfaser-verstärktem Kunststoff. Vorzugsweise beträgt die Vickershärte des Mantels 120 bei allen Stahl-Ausführungsformen mindestens bei 600 HV 10, oder besonders vorzugsweise haben die Stahl-Ausführungsformen eine Rockwell-Härte von mehr als 55 HRC.

Der Mantel 120 ist bei allen Ausführungsformen druck- und wasserfest.

Der Mantel 120 ist vorzugsweise bei allen Ausführungsformen spülmaschinenfest. Der Mantel 120 hat bei allen Ausführungsformen eine glatte und gut zu reinigende Oberfläche, um auch bei mehrfachem Gebrauch Hygienevorschriften zu erfüllen. Zu diesem Zweck ist die Oberfläche des Mantels 120 vorzugsweise bei allen Ausführungsformen beschichtet, oberflächengehärtet, eloxiert, emataliert oder elektropoliert.

Der Mantel 120 hat bei allen Ausführungsformen vorzugsweise eine Wandstärke, die zwischen 0,2 mm und 1,5 mm beträgt, um dem Mantel die erforderliche Eigenfestigkeit gegen Verformung zu geben.

Der Mantel 120 hat vorzugsweise bei allen Ausführungsformen einen umlaufenden Kragen 123 im Bereich der Öffnung 122, um ein besseres Handhaben und Einspannen in der Vorrichtung 100 zu ermöglichen. Dadurch, dass der umlaufende Kragen 123 vorgesehen ist, vergrössert sich der Maximaldurchmesser D3 gegenüber dem Durchmesser D2 um einige Millimeter. Es gilt stets: D1 < D2 < D3.

Der Mantel 120 hat bei allen Ausführungsformen eine bodenseitige Öffnung 124 im Bodenbereich 121. Im Bereich dieser bodenseitigen Öffnung 124 ist das Gebinde 130 für das Hineinpressen oder für das Austreten von Wasser zugänglich. In diesem Bereich liegt das Gebinde 130 eng und dicht an dem umlaufenden Dichtungselement 140, falls vorhanden, an.

In Fig. 2B ist ein zweiter Mantel 120 der Erfindung in einer Schnittansicht gezeigt. Der Mantel 120 hat wiederum eine konische Form und verjüngt sich in der gezeigten Darstellung von unten nach oben. Im Bodenbereich 121 hat der Mantel 120 somit einen kleineren Durchmesser D1 als im Bereich der Öffnung 122. Es gilt stets: D1 < D2. Der zweite Mantel 120 nach Fig. 2B hat in etwa die Aussenform und -dimension der Kaffeekapseln eines zweiten Herstellers. Der zweite Mantel 120 unterscheidet sich einerseits durch die Aussenform und - dimension vom ersten Mantel nach Fig. 2A. Andererseits weist er zusätzlich eine umlaufende Schulter 125 auf. Weiterhin ist die Öffnung 124 etwas kleiner und nimmt nicht den kompletten Bodenbereich 121 ein.

Die Ausführungsform nach Fig. 2B zeichnet sich dadurch aus, dass im Bereich der bodenseitigen Öffnung 124 ein Teil des horizontalen Lochrandes nach innen umgelegt (z.B. durch Umbiegen oder -falzen) ist. Der umgelegte Lochrand dient hauptsächlich dazu, dass einerseits der Bodenbereich 131 des Gebindes 130 im Bereich des umlaufenden Dichtelements 140 dicht innen gegen gepresst werden kann. Andererseits bietet das umlaufende Dichtelement 140 in der in Fig. 2B gezeigten Ausbildung eine Kante 141 mit einem Radius, der das Material des Gebindes 130 nicht beschädigt.

Die Ausführungsform nach Fig. 2B zeichnet sich dadurch aus, dass im Aussenbereich des Mantels 120 ein umlaufendes Dichtelement 150 vorgesehen ist. Hier dient eine elastische Dichtungslippe oder -lamelle 152 (z.B. eine Gummilippe) als umlaufendes Dichtelement 150. Das umlaufende Dichtelement 150 kann z.B. im Bereich des umlaufenden Kragens 123 oder, wie in Fig. 2B gezeigt, im Bereich der umlaufenden Schulter 125 platziert werden.

In Fig. 2B von oben nach unten betrachtet, weist der Mantel 120 eine erste Horizontalebene E1 auf, die hier nur teilweise von der bodenseitigen Öffnung 124 eingenommen wird. Dann folgt eine erster ringförmiger Wandabschnitt mit grosser Steigung, ein zweiter kurzer ringförmiger Wandabschnitt mit geringerer Steigung, ein dritter kurzer ringförmiger Wandabschnitt mit grosser Steigung (vorzugsweise zylinderförmig mit Mantelfläche parallel zur Symmetrieachse R) und ein vierter ringförmiger Wandabschnitt mit geringerer Steigung. Der vierte ringförmige Wandabschnitt bildet den umlaufenden Kragen 123. Der umlaufende Kragen 123 liegt mindestens teilweise in einer zweiten Horizontalebene E2. Der dritter kurze ringförmige Wandabschnitt und der vierte ringförmige Wandabschnitt bilden die umlaufende Schulter 125.

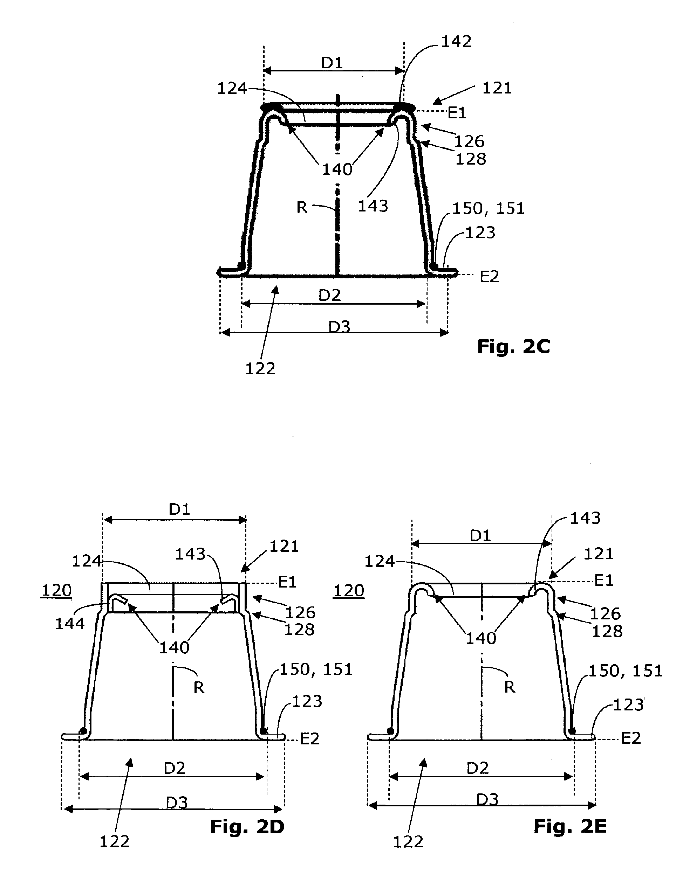

In Fig. 2C ist ein dritter Mantel 120 der Erfindung in einer Schnittansicht gezeigt. Der Mantel 120 hat wiederum eine konische Form und verjüngt sich in der gezeigten Darstellung von unten nach oben. Es gilt stets: D1 < D2. Der dritte Mantel 120 nach Fig. 2C hat in etwa die Aussenform und -dimension der Kaffeekapseln eines weiteren Herstellers. Der dritte Mantel 120 unterscheidet sich im Wesentlichen dadurch von den anderen gezeigten Mänteln 120, dass im Bodenbereich 121 ein umlaufendes Dichtelement 140 dadurch ausgebildet ist, dass der Lochrand der bodenseitigen Öffnung 124 nach unten gebogen oder gefalzt (vorzugsweise durch Bördeln oder Tiefziehen) ist. Dadurch wird ein nach innen weisender Rand 143 erzeugt, der hier ein integraler Bestandteil des Mantels 120 ist. Im Bereich dieses nach innen weisenden Randes 143 kann, wie in Fig. 2C gezeigt, eine Gummidichtung, -manschette oder -tülle 142 oder dergleichen sitzen, um für eine gute Abdichtung gegenüber einem Kapselkäfig 110 zu sorgen.

In Fig. 2C von oben nach unten betrachtet, weist der Mantel 120 eine erste Horizontalebene E1 auf, die hier zum Teil von der bodenseitigen Öffnung 124 eingenommen wird. Dann folgt eine erster ringförmiger Zylinderabschnitt 126, ein zweiter ringförmiger Wandabschnitt mit grosser Steigung und ein dritter ringförmiger Wandabschnitt mit geringerer Steigung. Der dritte ringförmige Wandabschnitt bildet den umlaufenden Kragen 123. Der umlaufende Kragen 123 liegt mindestens teilweise in einer zweiten Horizontalebene E2. Der erste ringförmige Zylinderabschnitt 126 bildet eine Art Sockel. Vorzugsweise ist im Übergang von dem Zylinderabschnitt 126 zu dem zweiten ringförmigen Abschnitt eine kleine umlaufende Schulter 128 (in Form eines Absatzes) oder eine umlaufende Sicke vorgesehen. Die Gummidichtung, -manschette oder -tülle 142 sitzt etwas oberhalb der Horizontalebene E1.

In Fig. 2D ist ein vierter Mantel 120 der Erfindung in einer Schnittansicht gezeigt. Der Mantel 120 hat wiederum eine konische Form und verjüngt sich in der gezeigten Darstellung von unten nach oben. Im Bodenbereich 121 hat der Mantel 120 einen zylinderförmigen Abschnitt 126, der z.B. wie ein Sockel des Mantels 120 ausgebildet sein kann. Es gilt stets: D1 < D2. Der vierte Mantel 120 nach Fig. 2D hat in etwa die Aussenform und -dimension der Kaffeekapseln eines weiteren Herstellers. Der vierte Mantel 120 unterscheidet sich im Wesentlichen dadurch von den anderen bisher gezeigten Mänteln 120, dass der zylinderförmige Abschnitt 126 einen planen, ringförmigen Bodenbereich 121 festlegt. Ausserdem bildet der zylinderförmige Abschnitt 126 einen umlaufenden Kragen oder Sammelbereich, damit Wasser, das von oben durch die Öffnung 124 hindurch in das Gebinde 130 eingebracht wird, nicht seitlich aussen an der Wandung des Mantels 120 vorbei laufen kann.

Die Ausführungsform nach Fig. 2D zeichnet sich dadurch aus, dass im Bereich der bodenseitigen Öffnung 124 entlang des Lochrandes innen ein umlaufendes Dichtelement 140 vorgesehen ist. Das Dichtelement 140 kann z.B. durch das Befestigen einer ringförmigen Scheibe 144 oder eines ähnlich gestalteten Elements mit (umgebogenem oder gefalztem) Rand 143 bereit gestellt werden. Die Scheibe 144 mit Rand 143 dient hauptsächlich dazu, dass der Bodenbereich 131 des Gebindes 130 im Bereich des umlaufenden Dichtelements 140 dicht innen gegen gepresst werden kann.

Die Ausführungsform nach Fig. 2D zeichnet sich dadurch aus, dass im Aussenbereich des Mantels 120 ein umlaufendes Dichtelement 150 vorgesehen ist. Hier dient ein elastischer Dichtungsring 151 (z.B. eine Gummidichtung) als umlaufendes Dichtelement 150. Das umlaufende Dichtelement 150 kann z.B. im Bereich des umlaufenden Kragens 123 platziert werden.

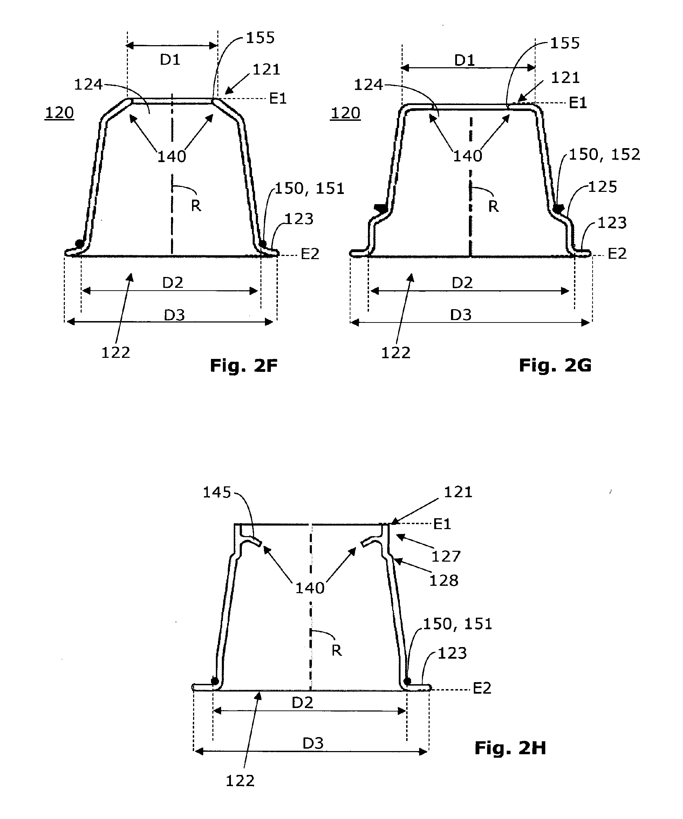

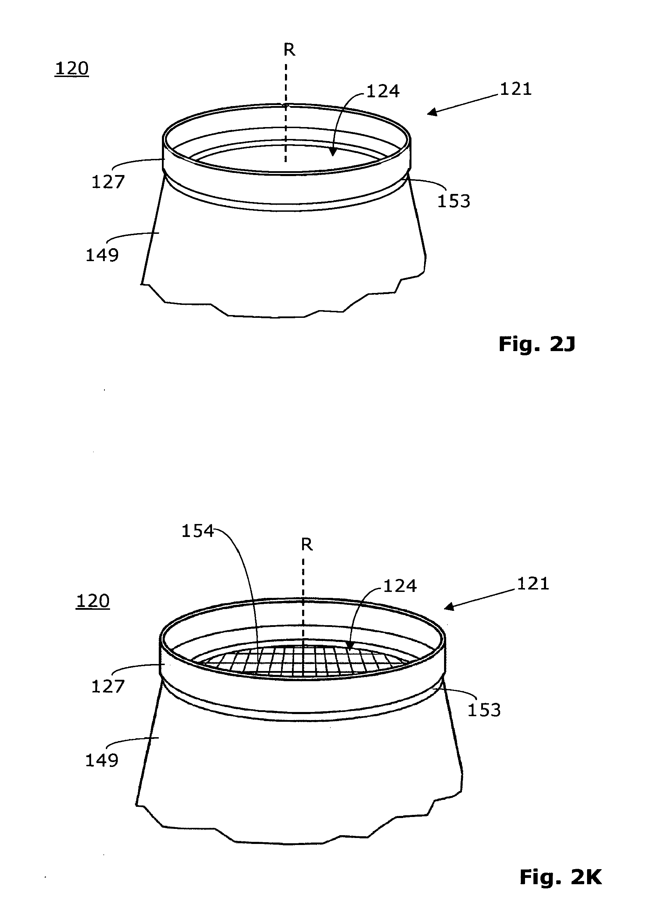

In Fig. 2D von oben nach unten betrachtet, weist der Mantel 120 eine erste Horizontalebene E1 auf, die hier komplett von der bodenseitigen Öffnung 124 eingenommen wird (der Durchmesser der bodenseitigen Öffnung 124 entspricht fast dem Durchmesser D1). Dann folgt eine erster ringförmiger Zylinderabschnitt 126, ein zweiter ringförmiger Wandabschnitt mit grosser Steigung und ein dritter ringförmiger Wandabschnitt mit geringerer Steigung. Der dritte ringförmige Wandabschnitt bildet den umlaufenden Kragen 123. Der umlaufende Kragen 123 liegt mindestens teilweise in einer zweiten Horizontalebene E2.
Der erste ringförmige Zylinderabschnitt 126 bildet den Sockel. Vorzugsweise ist im Übergang von dem Zylinderabschnitt 126 zu dem zweiten ringförmigen Wandabschnitt eine kleine umlaufende Schulter 128 (in Form eines Absatzes, wie in Fig. 2H gezeigt) oder einer umlaufenden Sicke (wie z.B. in Fig. 2J oder 2K) vorgesehen.

Es ist auch eine Variation der Ausführungsform nach Fig. 2D möglich, bei der ein Ringelement innen in dem (nach unten gebogen oder gefalzten) Lochrand sitzt, wobei jedoch stets ein genau definierter Anschlagpunkt definiert sein soll.

In Fig. 2E ist ein fünfter Mantel 120 der Erfindung in einer Schnittansicht gezeigt, der ähnlich ist zu dem Mantel 120 nach Fig. 2C. Der Mantel 120 hat wiederum eine konische Form und verjüngt sich in der gezeigten Darstellung von unten nach oben. Es gilt stets: D1 < D2. Der fünfte Mantel 120 nach Fig. 2E hat in etwa die Aussenform und -dimension der Kaffeekapseln eines weiteren Herstellers. Der fünfte Mantel 120 unterscheidet sich im Wesentlichen dadurch von den anderen gezeigten Mänteln 120, dass im Bodenbereich 121 ein umlaufendes Dichtelement 140 dadurch ausgebildet ist, dass der Lochrand der bodenseitigen Öffnung 124 nach unten gebogen oder gefalzt (vorzugsweise durch Bördeln oder Tiefziehen) ist. Dadurch wird ein nach innen weisender Rand 143 erzeugt, der hier ein integraler Bestandteil des Mantels 120 ist.

Die Ausführungsform nach Fig. 2E zeichnet sich dadurch aus, dass im Aussenbereich des Mantels 120 ein umlaufendes Dichtelement 150 vorgesehen ist. Hier dient ein elastischer Dichtungsring 151 (z.B. eine Gummidichtung) als umlaufendes Dichtelement 150. Das umlaufende Dichtelement 150 kann z.B. im Bereich des umlaufenden Kragens 123 platziert werden.

Es werden Ausführungsformen bevorzugt, die einfach in der Herstellung sind und die trotzdem die gewünschte Wirkung zeigen. Eine einfach herzustellende und sehr effektiv wirkende Lösung wurde aus der Ausführungsform nach Fig. 2A abgeleitet. Eine entsprechende Abbildung ist in Fig. 2F gezeigt. Statt einer umgebogenen oder umgelegten Kante 141 (siehe Fig. 2A) kann der Lochrand 155 mit einem leichten Radius oder eine Fase versehen sein, damit das Material des Gebindes 130 nicht beschädigt wird. Ansonsten wird im Zusammenhang mit Fig. 2F auf die Beschreibung der Fig. 2A verwiesen.

Besonders bevorzugt ist eine Variation der Ausführungsform nach Fig. 2G, bei der statt eines nach unten gebogen oder gefalzten Lochrandes ein leicht abgerundeter oder mit einer Fase versehener Lochrand 155 vorgesehen ist. Fig. 2G zeigt eine Variation der Ausführungsform nach Fig. 2B und es wird daher auf die Beschreibung der Fig. 2B verwiesen.

In Fig. 2H ist ein sechster Mantel 120 der Erfindung in einer Schnittansicht gezeigt. Im Bodenbereich 121 hat der Mantel 120 einen zylinderförmigen Abschnitt 127, der z.B. wie ein Sockel des Mantels 120 ausgebildet sein kann. Es gilt stets: D1 < D2. Der sechste Mantel 120 nach Fig. 2H hat in etwa die Aussenform und -dimension der Kaffeekapseln eines weiteren Herstellers. Der sechste Mantel 120 unterscheidet sich im Wesentlichen dadurch von den anderen gezeigten Mänteln 120, dass der zylinderförmige Abschnitt 127 einen planen, ringförmigen Bodenbereich 121 festlegt. Ausserdem bildet der zylinderförmige Abschnitt 127 einen umlaufenden Kragen oder Sammelbereich, damit Wasser, das von oben durch die Öffnung 124 hindurch in das Gebinde 130 eingebracht wird, nicht seitlich aussen an der Wandung des Mantels 120 vorbei läuft.

In Fig. 2H von oben nach unten betrachtet, weist der Mantel 120 eine erste Horizontalebene E1 auf, die hier zum Teil von der bodenseitigen Öffnung 124 eingenommen wird. Dann folgt eine erster ringförmiger Zylinderabschnitt 127, ein zweiter ringförmiger Wandabschnitt mit grosser Steigung und ein dritter ringförmiger Wandabschnitt mit geringerer Steigung. Der dritte ringförmige Wandabschnitt bildet den umlaufenden Kragen 123. Der umlaufende Kragen 123 liegt mindestens teilweise in einer zweiten Horizontalebene E2. Der erste ringförmige Zylinderabschnitt 127 bildet den Sockel. Vorzugsweise ist im Übergang von dem Zylinderabschnitt 127 zu dem zweiten ringförmigen Abschnitt eine kleine umlaufende Schulter 128 (in Form eines Absatzes) oder eine umlaufende Sicke vorgesehen.
Die Ausführungsform nach Fig. 2H zeichnet sich dadurch aus, dass im Bereich der bodenseitigen Öffnung 124 ein umlaufendes Dichtelement 140 vorgesehen ist. Das Dichtelement 140 kann z.B. durch das Vorsehen eines nasen- oder hakenförmigen, nach innen weisenden Randes 145 bereit gestellt werden.
Der Rand 145 dient hauptsächlich dazu, dass der Bodenbereich 131 des Gebindes 130 im Bereich des umlaufenden Dichtelements 140 dicht innen gegen gepresst wird.

Die Ausführungsform nach Fig. 2H zeichnet sich dadurch aus, dass im Aussenbereich des Mantels 120 ein umlaufendes Dichtelement 150 vorgesehen ist. Hier dient ein elastischer Dichtungsring 151 (z.B. eine Gummidichtung) als umlaufendes Dichtelement 150. Das umlaufende Dichtelement 150 kann z.B. im Bereich des umlaufenden Kragens 123 platziert werden.

Es ist auch eine Variation der Ausführungsform nach Fig. 2H möglich, bei der ein Ringelement innen in dem nach unten gebogen oder gefalzten Lochrand sitzt.

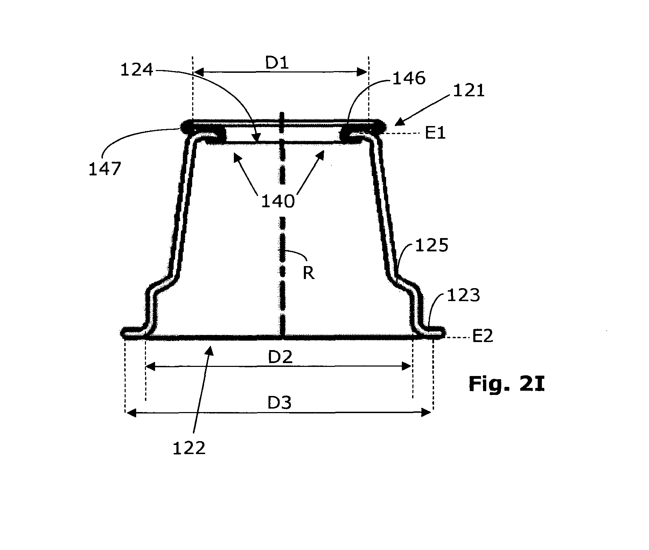

In Fig. 2I ist ein siebter Mantel 120 der Erfindung in einer Schnittansicht gezeigt. Der Mantel 120 hat wiederum eine konische Form (wie z.B. in Fig. 2B) und verjüngt sich in der gezeigten Darstellung von unten nach oben. Im Bodenbereich 121 hat der Mantel 120 somit einen kleineren Durchmesser D1 als im Bereich der Öffnung 122. Es gilt stets: D1 < D2.

Im Bereich der bodenseitigen Öffnung 124 ist ein Dichtelement 146 vorgesehen, das zwei Funktionen erfüllt. Einerseits dient es als umlaufendes Dichtelement 140, das mindestens teilweise innen um den Rand der bodenseitigen Öffnung 124 herum verläuft. Es schützt somit den Rand der bodenseitigen Öffnung 124, oder anderes ausgedrückt, es gibt diesem Rand einen grösseren Radius und eine gewisse Elastizität und schützt somit das Gebinde 130, wenn dieses von Innen gegen den Rand gepresst wird. Ausserdem bietet das Dichtelement 146 einen Wulst 147, der hier im Übergangsbereich zwischen dem Bodenbereich 121 und der Mantelfläche des Mantels 120 sitzt. Dieser Wulst 147 dient als umlaufendes Dichtelement 150. Es braucht daher nicht zwingend ein weiteres umlaufendes Dichtelement 150. Es kann aber ein weiteres umlaufendes Dichtelement 150 z.B. im Bereich der umlaufenden Schulter 125 und/oder im Bereich des Kragens 123 angeordnet sein.

In Fig. 2I von oben nach unten betrachtet, weist der Mantel 120 eine erste Horizontalebene E1 auf, die hier nur teilweise von der bodenseitigen Öffnung 124 eingenommen wird. Etwas oberhalb der Horizontalebene E1 liegt ein Teil des Dichtelements 146 (hier der Wulst 147). Es folgen eine erster ringförmiger Wandabschnitt mit grosser Steigung, ein zweiter kurzer ringförmiger Wandabschnitt mit geringerer Steigung, ein dritter kurzer ringförmiger Wandabschnitt mit grosser Steigung und ein vierter ringförmiger Wandabschnitt mit geringerer Steigung. Der vierte ringförmige Wandabschnitt bildet den umlaufenden Kragen 123. Der umlaufende Kragen 123 liegt mindestens teilweise in einer zweiten Horizontalebene E2. Der zweite kurze ringförmige Wandabschnitt und der dritte ringförmige Wandabschnitt bilden die umlaufende Schulter 125.

Fig. 2J zeigt Details einer weiteren Lösung. Es ist hier nur der Bodenbereich 121 gezeigt. Der Mantel 120 hat auch hier einen zylinderförmigen Abschnitt 127, der als Sockel dient (ähnlich wie in Fig. 2D, 2F, 2H). Vorzugsweise ist im Übergang von dem Zylinderabschnitt 127 zu dem konischen Teil 149 des Mantels 120 eine kleine umlaufende Sicke 153 vorgesehen. Im Bereich der umlaufenden Sicke 153 kann optional ein umlaufendes Dichtelement 150 sitzen. Die in Fig. 2J gezeigte Lösung ist vorzugsweise zum Durchströmen mit Wasser ausgelegt, wie in Fig. 7 durch Pfeile gezeigt.

Fig. 2K zeigt Details einer weiteren Lösung. Es ist hier nur der Bodenbereich 121 gezeigt. Der Mantel 120 hat auch hier einen zylinderförmigen Abschnitt 127, der als Sockel dient (ähnlich wie in Fig. 2D, 2F, 2H, 2J). Vorzugsweise ist im Übergang von dem Zylinderabschnitt 127 zu dem konischen Teil 149 des Mantels 120 eine kleine umlaufende Sicke 153 vorgesehen. Im Bereich der umlaufenden Sicke 153 kann optional ein umlaufendes Dichtelement 150 sitzen. Die in Fig. 2K gezeigte Lösung ist vorzugsweise zum entgegengesetzten Durchströmen mit Wasser ausgelegt. Das Wasser tritt durch die bodenseitige Öffnung 124 aus. Im Bereich der bodenseitigen Öffnung 124 kann ein Siebelement oder ein Netz 154 sitzen, wie angedeutet.

In Fig. 3A ist ein erstes vorgeformtes Gebinde 130 der Erfindung in einer Schnittansicht gezeigt, wobei es sich vorzugsweise um ein Gebinde 130 aus Filterpapier handelt. Das Gebinde 130 umfasst im Bereich 132 einen Deckel 133, der entweder ein integraler Bestandteil des Gebindes 130 ist, oder der als separates Teil in das Gebinde 130 eingelegt werden kann, um eine untenliegende Öffnung des Gebindes 130 zu verschließen.

Die vorgeformten Gebinde 130 der Erfindung haben von sich aus eine Eigenform, die annährend der Innenform eines der Mäntel 120 entspricht.

Das vorgeformte Gebinde 130 nach Fig. 3A hat eine konische oder bombierte Form und verjüngt sich in der gezeigten Darstellung von unten nach oben. Im Bodenbereich 131 hat das Gebinde 130 somit einen kleineren Durchmesser D4 als im Bereich 132. Es gilt stets: D4 < D5. Das erste Gebinde 130 nach Fig. 3A hat in etwa die Aussenform und -dimension der Innenseite eines der Mäntel nach Fig. 2A bis 2K.

Fig. 3B zeigt ein zweites vorgeformtes Gebinde 130 der Erfindung in einer Seitenansicht, wobei es sich vorzugsweise um ein Gebinde 130 aus Filterpapier handelt. Das gezeigte Gebinde 130 ist dem Gebinde 130 nach Fig. 3A ähnlich. Lediglich der obere Endbereich 135 des Gebindes 130 nach Fig. 3B ist speziell abgesetzt. Die Form und Dimension des oberen Endbereichs 135 ist so gewählt, dass dieser perfekt in das Innere eines Mantels 120 z.B. nach Fig. 2A passt, wobei der abgesetzte obere Endbereich 135 mit der Stufe oder Kante 135.1 dicht an dem umlaufenden Dichtelement 140 anliegt und sich der obere Endbereich 135 ein kleines Stück weit (in Form eines Meniskus) durch die bodenseitige Öffnung 124 hindurch wölbt.

Fig. 3C zeigt ein drittes vorgeformtes Gebinde 130 der Erfindung in einer Seitenansicht, wobei es sich vorzugsweise um ein Gebinde 130 aus Filterpapier Handelt, das dem nach Fig. 3B sehr ähnlich ist. Daher wird auf die Beschreibung der Fig. 3B verwiesen. Der wesentliche Unterschied liegt darin, dass das dritte vorgeformte Gebinde 130 keinen umlaufenden Rand 134 hat.

Eine Kombination aus einem vorgeformten Gebinde 130 mit abgesetztem oberen Endbereich 135 (wie z.B. in Fig. 3B gezeigt) und einem Mantel 120 nach einem der Figuren 2A bis 2I, liefert besonders vorteilhafte Ergebnisse.

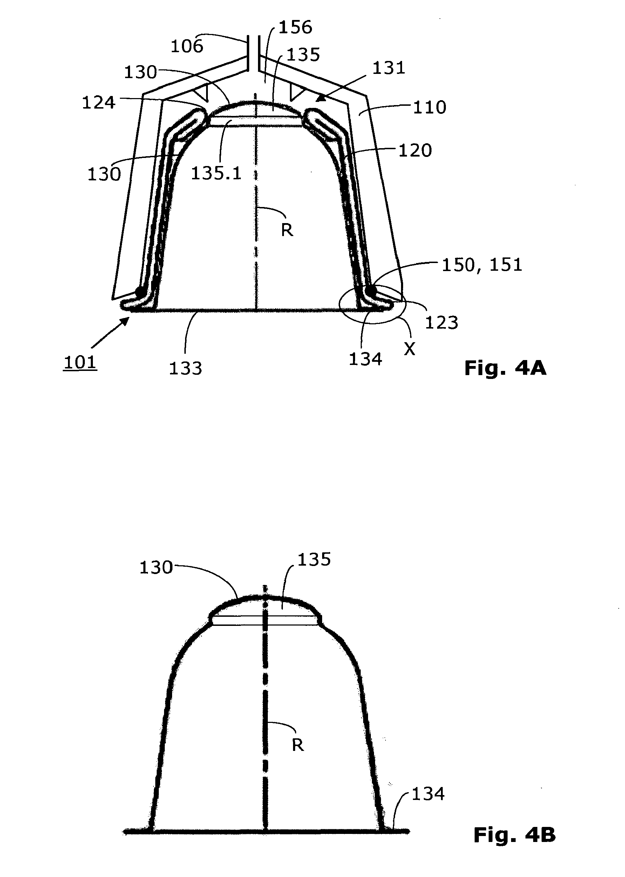

In Fig. 4A ist zu erkennen, dass das erste Gebinde 130 nach Fig. 3A genau in den ersten Mantel nach Fig. 2A passt, um so eine zusammengesetzte Kaffeekapsel 101 zu bilden, die in der Vorrichtung 100 wie eine konventionelle Kaffeekapsel 2 eingesetzt werden kann. Aufgrund der Tatsache, dass das erste Gebinde 130 nach Fig. 3A etwas verformbar ist, passt es sich der Innenform des Mantels 120 an und bildet einen ähnlichen abgesetzten oberen Endbereich 135, wie bei dem Gebinde 130 nach Fig. 3B produktionsseitig vorgegeben ist.

Die Fig. 4A zeigt eine zusammengesetzte erste Kaffeekapsel 101 in einer Schnittansicht, die sich aus dem ersten Mantel 120 nach Fig. 2A und dem Gebinde 130 nach Fig. 3A zusammensetzt. Das Gebinde 130 sitzt so im Inneren des Mantels 120, dass der Bodenbereich 131 des Gebindes 130 die Form eines Meniskus bildet durch die bodenseitige Öffnung 124 hindurch zugänglich ist, um heißes Wasser unter Druck ins Innere des Gebindes 130 pressen zu können. Im Bereich X liegen bei dieser Ausführungsform der umlaufenden Kragen 123 und der umlaufenden Kragen 134 aufeinander auf.

Fig. 4A zeigt auch einen beispielhaften Kapselkäfig 110 in stark schematisierter Form. Ein solcher Kapselkäfig 110 kommt in den Vorrichtungen 100 zum Einsatz und nimmt die zusammengesetzte Kaffeekapsel 101 auf. Oberhalb des Meniskus 135 bildet sich ein Hohlraum 156. Wasser wird durch eine Verbindungsleitung 106 in den Hohlraum 156 eingebracht und dringt von dort aus in das Gebinde 130 ein. Innen können je nach Ausführungsform der Vorrichtung 100 Zacken oder Backen vorgesehen sein, die bei konventionellen Kapseln dazu dienen die Kapseln zu durchstossen. In Fig. 4A sind zwei Zacken innen am Kapselkäfig 110 gezeigt, die hier weder mit dem Mantel 120 noch mit dem Gebinde 130 in Kontakt stehen.

Die vorgeformten Gebinde 130 der Erfindung können entweder von Hand befüllt werden, oder sie können vom Hersteller oder einem Befüller mit Pulver K befüllt und verschlossen worden sein.

Alle Gebinde 130, d.h. sowohl die vorgeformten wie auch die flachen Gebinde 130, bilden beim Einfügen ins Innere eines der Mäntel 120 einen leicht abgesetzten oberen Endbereich 135. Der abgesetzte, obere Endbereich 135 entsteht dadurch, dass das Gebinde 130 in sich leicht verformbar und nicht formstabil ist oder dass das Gebinde 130 bereits produktionsseitig mit dem abgesetzten oberen Endbereich 135 ausgebildet ist (siehe Fig. 3B). Beim Gegenpressen gegen den Rand der bodenseitigen Öffnung 124, respektive gegen das umlaufende Dichtelement 140, wird ein Teil des Gebindes 130 ringförmig zusammen gedrückt und der Bodenbereich 131 wölbt sich ein Stück weit durch die bodenseitigen Öffnung 124 hindurch.

Fig. 4B zeigt ein Gebinde 130, nachdem es, wie in Fig. 4A gezeigt, in einem Mantel 120 gebraucht wurde. In Fig. 4B ist gut der abgesetzte, obere Endbereich 135 zu erkennen, der nach der Entnahme aus dem Mantel 120 mindestens teilweise erhalten bleibt.

Die Gebinde 130 können bei allen Ausführungsformen einen umlaufenden Kragen 134 im Bereich des Deckels 133 haben, um ein besseres Handhaben, Einsetzen in den Mantel 120 und Einsetzen/Einspannen in der Vorrichtung 100 zu ermöglichen.

Falls ein umlaufender Kragen 134 vorgesehen ist, vergrössert sich der Maximaldurchmesser D6 gegenüber dem Durchmesser D5 um einige Millimeter. Es gilt stets: D4 < D5 < D6.

In Fig. 5A ist ein flaches Gebinde 130 gezeigt. Es handelt sich um ein Gebinde 130, das vorzugsweise aus zwei Lagen Filterpapier besteht, die entlang eines Teils des Randes miteinander verbunden sind. Der entsprechende Verbindungsbereich 136 ist in den Figuren durch eine Kreuzschraffur dargestellt. Das Gebinde 130 hat im Bereich 132 eine Öffnung 137. Durch die Öffnung 137 hindurch kann der Innenraum des Gebindes 130 beim Hersteller, bei einem Befüller oder beim Anwender mit Pulver K befüllt werden.

Das Gebinde 130 nach Fig. 5A zeichnet sich dadurch besonders aus, dass es im Bodenbereich 131 eine Taillierung oder eine Strukturierung 139 aufweist, die als Anpassung an die Form des zu verwendenden Mantels 120 zu verstehen ist. Diese Taillierung oder Strukturierung 139 entspricht von der Funktion her in etwa dem abgesetzten oberen Endbereich 135 der Figuren 3B, 4A, 4B. Im Bereich der Taillierung oder eine Strukturierung 139 hat das Gebinde 130 einen Durchmesser D7, der in etwa dem lichten Durchmesser der bodenseitigen Öffnung 124 des Mantels 120 entspricht. Falls das Gebinde 130 nach Fig. 5A z.B. für den Einsatz in einem Mantel 120 nach Fig. 2A gedacht ist, ist der Durchmesser D7 etwas kleiner als der Durchmesser D1.

Der Innenraum des Gebindes 130 hat bei allen Ausführungsformen entweder eine sackförmige, taschenförmige, trichterförmige, kegelstumpfförmige oder zylinderförmige Gestalt.

Im Bereich der Öffnung 137 kann ein Lappen oder eine Falz 138 vorgesehen sein, die ein Verschliessen nach dem Befüllen ermöglicht. Beim Befüllen durch den Hersteller oder Befüller kann der Lappen oder die Falz 138 fest verschlossen werden. Beim Anwender kann der Lappen oder die Falz 138 durch Zusammenfalten oder Einklappen verschlossen werden.

In Fig. 5B ist ein weiteres Gebinde 130 gezeigt. Es handelt sich um ein Gebinde 130, das wiederum aus zwei Lagen Filterpapier besteht, die entlang eines Teils des Randes miteinander verbunden sind. Der entsprechende Verbindungsbereich 136 ist durch eine Kreuzschraffur dargestellt. Das Gebinde 130 hat im Bereich 132 eine Öffnung 137. Durch die Öffnung 137 hindurch kann der Innenraum des Gebindes 130 beim Hersteller, bei einem Befüller oder beim Anwender mit Pulver K befüllt werden. Der bogenförmige Bodenbereich 131 des Gebindes 130 hat hier keine spezielle Taillierung und keine Strukturierung 139. Aufgrund der Tatsache, dass das Gebinde 130 leicht verformbar und nicht formstabil ist, kann es trotzdem satt von Innen gegen den umlaufenden Rand der Öffnung 124 des Mantels 120 gedrückt werden. Es bildet sich dadurch, ähnlich wie in Fig. 4B gezeigt, ein abgesetzter oberer Endbereich 135.

Das Gebinde 130 nach Fig. 5C ist ähnlich wie das Gebinde der Fig. 5A ausgeführt. Es wird daher auf die Beschreibung der Fig. 5A verwiesen. Das Gebinde 130 nach Fig. 5C zeichnet sich jedoch dadurch besonders aus, dass es im Bereich 132 verschlossen ist. Es handelt sich hier also um ein flaches Gebinde 130, das beim Hersteller oder Befüller mit Pulver K befüllt und verschlossen wurde. Der Verbindungsbereich 136 umgibt das Gebinde 130 entlang des gesamten Umfangs.

Das Gebinde 130 nach Fig. 5D ist ähnlich wie das Gebinde der Fig. 5B ausgeführt. Es wird daher auf die Beschreibung der Fig. 5B verwiesen. Das Gebinde 130 nach Fig. 5D zeichnet sich jedoch dadurch besonders aus, dass es im Bereich 132 verschlossen ist. Es handelt sich hier also um ein flaches Gebinde 130, das beim Hersteller oder Befüller mit Pulver K befüllt und verschlossen wurde. Der Verbindungsbereich 136 umgibt das Gebinde 130 entlang des gesamten Umfangs.

Sämtliche Gebinde 130 können auch aus einer Kombination von Filterpapier mit Kunststoff oder Aluminium gefertigt sein, wobei aus Gründen der Umweltverträglichkeit bei allen Ausführungsformen Gebinde 130 bevorzugt werden, die zu 100% aus Filterpapier bestehen.

Sämtliche Gebinde 130 können auch aus einem dünnen Kunststoffmaterial (ähnlich wie eine Blisterfolie oder ein Schlauchmantel) oder aus einem dünnen Kunststoffmaterial mit Aluminiumbeschichtung gefertigt sein.

Die flachen Gebinde 130 haben bei allen Ausführungsformen vorzugsweise einen zweilagigen Aufbau, wobei die Form der beiden Lagen und die Gestalt des Verbindungsbereichs 136 so gewählt ist, dass das flache Gebinde 130 nach dem Befüllen mit Pulver K in etwa die Innenform eines der Mäntel 120 der Erfindung einnimmt.

Die flachen Gebinde 130 haben bei allen Ausführungsformen besonders vorzugsweise einen zweilagigen Aufbau bei dem der Verbindungsbereich 136 innenliegend ist. D.h. in diesem Fall ist der Verbindungsbereich 136 nach innen gewendet. Durch diese Massnahme ergibt sich ein Aussenrand des flachen Gebindes 130, der ohne störenden Verbindungsbereich 136 besser innen an einem der Mäntel 120 der Erfindung anliegt. Der Verbindungsbereich 136 liegt bei diesen Ausführungsformen innen und wird nach dem Befüllen vom Pulver K umgeben. Diese Ausführungsformen sind nicht gezeigt, lassen sich aber aus den anderen abgebildeten Gebinden 130 ableiten.

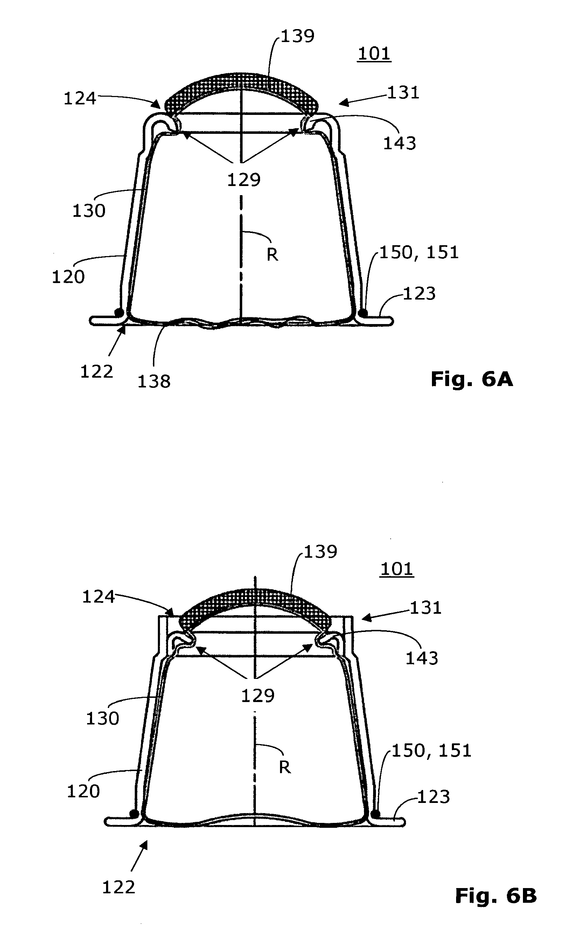

In Fig. 6A ist zu erkennen, dass das Gebinde 130 nach Fig. 5A genau in den Mantel nach Fig. 2E passt, um so eine zusammengesetzte Kaffeekapsel 101 zu bilden, die in der Vorrichtung 100 wie eine konventionelle Kaffeekapsel 2 eingesetzt werden kann. Anders als bei einem vorgeformten Gebinde 130, bilden sich beim Eindrücken eines flachen Gebindes 130 im Bereich der Öffnung 122 des Mantels 120 Falten und/oder Wellen und/oder Überlappungen des Materials des Gebindes 130. Der Lappen oder die Falz 138 ist daher in Fig. 6A in welliger Form gezeigt. Der Verbindungsbereich 136 ist im Inneren des Mantels 120 nicht zu erkennen, da er flach an der Innenwand der Mantels 120 anliegt. Nur im Bereich der Taillierung, Strukturierung 139 ist der kreuzschraffierte Verbindungsbereich 136 sichtbar. Die Tatsache, dass ein Teil des Gebindes 130 durch die bodenseitige Öffnung 124 heraus ragt ist unkritisch, da hier in den im Handel befindlichen Maschinen (Vorrichtungen 100) ausreichend "Luft" vorhanden ist und da gemäss Erfindung Massnahmen getroffen werden, um ein zu weites Hindurchwölben zu verhindern. Ausserdem ist auch dieser Teil des Gebindes 130 verformbar und passt sich so den gegebenen Strukturen der Vorrichtung 100 an. In Fig. 6A ist gut zu erkennen, wie das Gebinde 130 im Bereich 129 des umlaufenden Dichtelements 140 (hier dient ein umgebogener Rand 143 als Dichtelement 140) zusammengedrückt wird und so eine dichte Verbindung mit dem umgebogenen Rand 143 bildet.

Beim Entwerfen des Mantels 120 und Gebindes 130 sollte darauf geachtet werden, dass der Meniskus, der sich dadurch bildet, dass das der Bodenbereich 131 des Gebindes 130 sich durch die bodenseitige Öffnung 124 hindurch wölbt, nicht zu gross ist und mit innenliegenden Elementen der Vorrichtung 100 kollidiert. Besonders bevorzugt sind daher all diejenigen Ausführungsformen, bei denen das umlaufende Dichtelement 140 so am Mantel 120 zurückversetzt positioniert ist, dass ein kleiner Abstand zur Horizontalebene E1 besteht. Die Ausführungsformen nach Fig. 2D, 2E, 2F, 2G, 2H, 2J und 2K erfüllen diese Bedingung.

In Fig. 6B ist zu erkennen, dass das Gebinde 130 nach Fig. 5C genau in den Mantel nach Fig. 2D passt, um so eine zusammengesetzte Kaffeekapsel 101 zu bilden, die in der Vorrichtung 100 wie eine konventionelle Kaffeekapsel 2 eingesetzt werden kann. Anders als bei einem vorgeformten Gebinde 130, bilden sich beim Eindrücken eines flachen, rundum verschlossenen Gebindes 130 nach Fig. 5C im Bereich der Öffnung 122 des Mantels 120 weniger Falten und/oder Wellen als bei einem Gebinde 130 nach Fig. 5A oder 5B. Im Bereich 122 ist daher in Fig. 6B nur eine leicht angedeutete Welligkeit gezeigt. Der Verbindungsbereich 136 ist im Inneren des Mantels 120 nicht zu erkennen, da er flach an der Innenwand der Mantels 120 anliegt. Nur im Bereich der Taillierung, Strukturierung 139 ist der kreuzschraffierte Verbindungsbereich 136 sichtbar. Die Tatsache, dass ein Teil des Gebindes 130 durch die bodenseitige Öffnung 124 heraus ragt ist unkritisch, da hier in den im Handel befindlichen Maschinen (Vorrichtungen 100) ausreichend "Luft" vorhanden ist und da gemäss Erfindung Massnahmen getroffen werden, um ein zu weites Hindurchwölben zu verhindern. Ausserdem ist auch dieser Teil des Gebindes 130 verformbar und passt sich so den gegebenen Strukturen der Vorrichtung 100 an. In Fig. 6B ist gut zu erkennen, wie das Gebinde 130 im Bereich 129 des umlaufenden Dichtelements 140 (hier dient ein umgebogener Rand 143 als Dichtelement 140) zusammengedrückt wird und so eine dichte Verbindung mit dem umgebogenen Rand 143 bildet.

Die anderen Gebinde 130 und Mäntel 120 verhalten sich ähnlich wie im Zusammenhang mit den beispielhaften Figuren 4A, 4B, 6A und 6B beschrieben.

Alle Gebinde 130 zeigen, nachdem sie in einem Mantel 120 gebraucht und aus diesem entnommen wurden, einen mehr oder weniger stark abgesetzten, oberen Endbereich 135 (siehe Fig. 4B).

In Fig. 7 ist eine schematische Ansicht einer beispielhaften Kaffeemaschine 100 mit einer zusammengesetzten Kaffeekapsel 101 gezeigt, die mit (Kaffee-)Pulver K befüllt ist und in einem entsprechenden Aufnahmebereich 105 der Maschine 100 sitzt. Heißes Wasser wird aus einem Tank 104 entnommen und über eine Leitung 106 typischerweise von oben her in das Innere der Kaffeekapsel 101 gepresst. Die Kaffeekapsel 101 sitzt vorzugsweise in einer Kapselaufnahme 110 (auch Kapselkäfig genannt), die die zusammengesetzte Kaffeekapsel 101 umgreift und ihr einen festen Sitz gibt. Das Gebinde 130 wird auf ein Siebelement 103 gepresst und dabei je nach Ausführungsform perforiert, oder das Gebinde 130 bleibt unbeschädigt (d.h. es wird nicht perforiert). Heißes Wasser dringt durch ein Loch, das im konischen Bodenbereich 131 des Gebindes 130 erzeugt wird, in das Innere des Gebindes 130 ein, durchdringt das (Kaffee-) Pulver K und verlässt die Kapsel 101 durch die erwähnte Perforierung P oder durch das Material des Gebindes 130, bevor z.B. durch einen Auslass 107 das (Kaffee-)Getränk abgegeben wird, wie in Fig. 7 durch zwei abwärts weisende Pfeile angedeutet.

Wie bereits erwähnt, kann das Wasser auch in umgekehrter Richtung durch den Mantel 120 samt Gebinde 130 geführt werden, wobei die zusammengesetzte Kaffeekapsel 101 dann die Vorrichtung 100 anders ausgeführt ist und/oder die zusammengesetzte Kaffeekapsel 101 in der Vorrichtung 100 anders positioniert oder orientiert ist.

Jede der beschriebenen zusammengesetzten (Kaffee-)Kapseln 101 kann in der gezeigten Vorrichtung 100, oder in einer ähnlichen Vorrichtung 100 eingesetzt werden, um ein (Kaffee-)Getränk bereitzustellen.

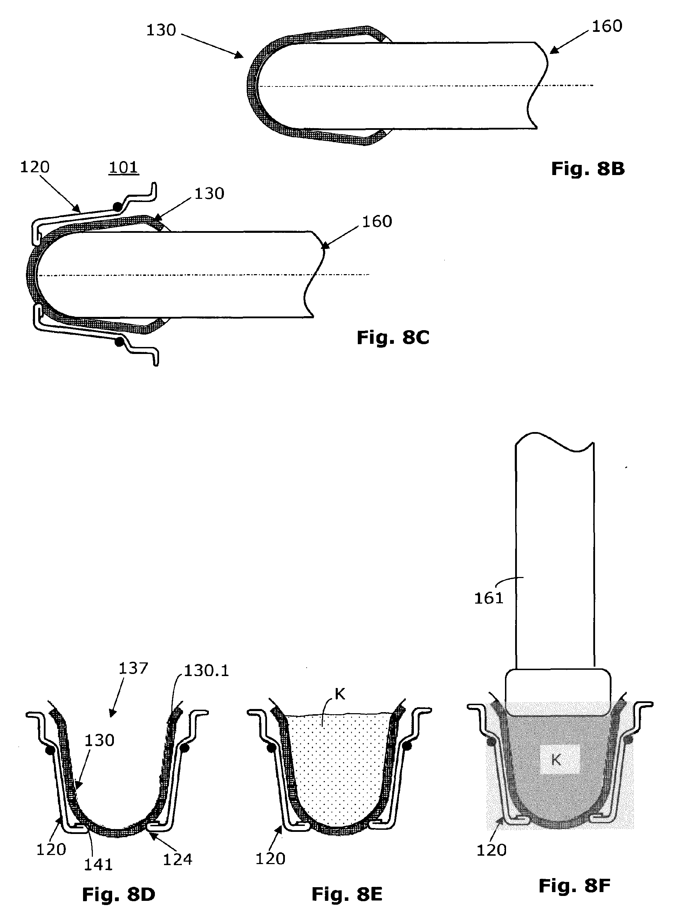

Anhand der stark schematisierten Figuren 8A bis 8I wird ein beispielhaftes Verfahren zum manuellen Befüllen eine Gebindes 130 und zum Verwenden einer zusammengesetzten Kapsel 101 in einer Vorrichtung 100 beschrieben. Fig. 8A zeigt einen ersten Verfahrensschritt zum manuellen Befüllen eines Gebindes 130 nach Fig. 5B, wobei ein Zapfen 160 zum Offenhalten des Gebindes 130 bereit gestellt wird. Fig. 8B zeigt einen zweiten Verfahrensschritt, wobei der Zapfen 160 in das Innere des Gebindes 130 eingeschoben wurde. Fig. 8C zeigt einen dritten Verfahrensschritt, wobei das Gebinde 130 samt Zapfen 160 in das Innere eines Mantels 120 nach Fig. 2B eingeschoben wurde. Fig. 8D zeigt einen vierten Verfahrensschritt, wobei der Mantel 120 samt Gebinde 130 vom Zapfen 160 abgenommen und gedreht wurde. Das Gebinde 130 sitzt so in dem Mantel 120, dass mindestens ein Teil des Gebindes 130 fest gegen das umlaufende Dichtelement 140 (hier in Form einer umgebogenen Kante 141) anliegt. Um das Befüllen zu erleichtern, kann der Rand 130.1 des Gebindes 130 nach aussen geklappt oder umgelegt werden. Dadurch erweitert sich die Öffnung 137 trichterförmig.

Ein Gebinde 130 kann jedoch auch ohne ein Hilfsmittel, wie den Zapfen 160, in das Innere eines Mantels 120 eingeführt werden.

Fig. 8E zeigt einen fünften Verfahrensschritt, wobei das Gebinde 130 lose mit Pulver K befüllt wurde. Um ein besseres Resultat zu erzielen, kann das Pulver K vorverdichtet werden. Fig. 8F zeigt einen entsprechenden sechsten Verfahrensschritt, wobei das Pulver K im Gebinde 130 unter Einsatz eines Stempels 161 (Tamper genannt) vorverdichtet wird. Das komprimierte Pulver K ist grau dargestellt, da es eine grössere Dichte hat als in Fig. 8E. Das Vorverdichten ist optional.

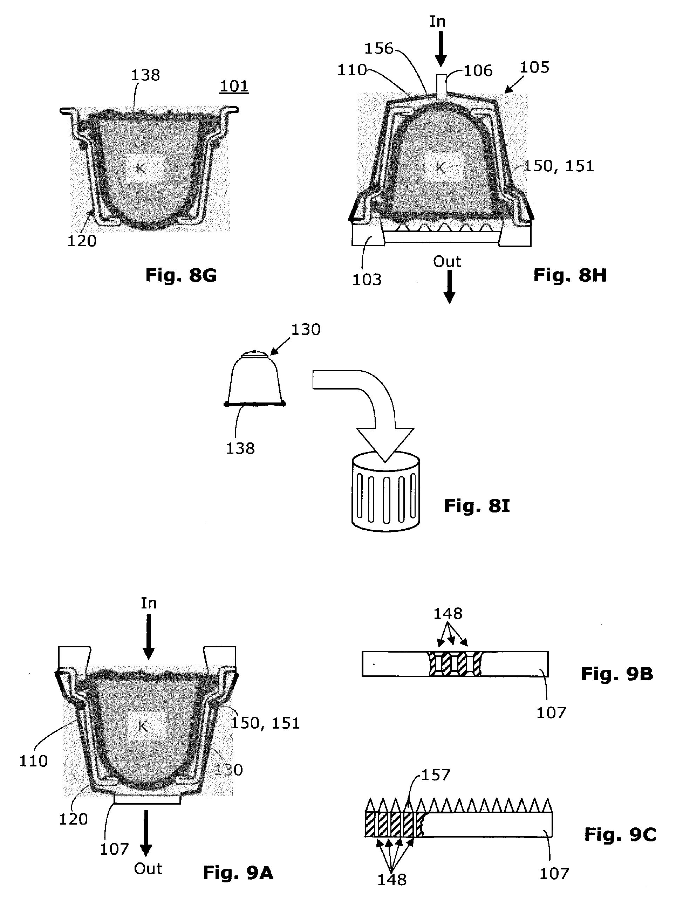

Fig. 8G zeigt einen siebten Verfahrensschritt, wobei die Öffnung 137 des Gebindes 130 verschlossen wurde. Dies kann bei einem Gebinde nach Fig. 5B dadurch erfolgen, dass der Lappen oder die Falz 138 zusammengelegt, zusammengefaltet oder zusammengedrückt wird. Durch das Zusammenlegen, Zusammenfalten oder Zusammendrücken bildet sich Falten und/oder Wellen und/oder Überlappungen des Materials des Gebindes 130, wie in Fig. 8G angedeutet. Statt des Verschliessens durch Zusammenlegen, Zusammenfalten oder Zusammendrücken, kann in diesem Schritt auch ein dünnes, rundes Filterpapierblatt eingelegt werden, um das Pulver K abzudecken und somit das Gebinde 130 zu verschliessen.

Fig. 8H zeigt einen achten Verfahrensschritt, wobei die zusammengesetzte Kapsel 101 der Fig. 8G in eine Vorrichtung 100 eingesetzt wurde. Zur Vereinfachung der Darstellung sind in Fig. 8H nur die wesentlichen Elemente des Aufnahmebereichs 105 der Vorrichtung 100 gezeigt, die sich im unmittelbaren Umfeld der zusammengesetzten Kapsel 101 befinden. Von einer Heisswasserversorgung 106 (siehe Fig. 7) wird Wasser unter Druck durch eine Verbindungsleitung 106 in den Hohlraum des Aufnahmebereichs der zusammengesetzten Kapsel 101 oberhalb des Gebindes 130 eingepresst, wie durch einen Pfeil gezeigt. Die zusammengesetzte Kapsel 101 sitzt hier im Inneren einer Kapselaufnahme 110 (auch Kapselkäfig genannt). In Fig. 8H ist die Kapselaufnahme 110 durch einen fett dargestellten Linienzug repräsentiert. Die zusammengesetzte Kapsel 101 besitzt hier sowohl ein Dichtelement 140 als auch ein Dichtelement 150. Das Dichtelement 140 dichtet das Gebinde 130 gegenüber dem Mantel 120 ab. Das Dichtelement 150 erzeugt eine dichte Verbindung des Mantels 120 im Inneren der Kapselaufnahme 110. Das Gebinde 130 der Kaffeekapsel 101 wird auf ein Siebelement 103 gepresst. Je nach Ausführungsform kann das Gebinde 130 entweder durch das Gegenpressen gegen das Siebelement 103 perforiert werden, oder das Gebinde 130 bleibt unbeschädigt. Zwischen dem Gebinde 130 und dem Siebelement 103 kann auch ein kleiner Abstand vorgesehen sein. Das Getränk tritt nun unterhalb des Siebelements 103 aus, wie durch einen Pfeil gezeigt. Das eintretende Wasser ist mit IN und das austretende Wasser, d.h. das Getränk, mit OUT bezeichnet. Die Richtung des Wasserflusses kann auch umgekehrt sein (siehe z.B. Fig. 9A), wie bereits erwähnt.

Fig. 8I zeigt einen weiteren Verfahrensschritt, wobei nach Gebrauch das Gebinde 130 samt Pulver K aus der Vorrichtung 100 entnommen wurde und z.B. im Grünabfall oder auf einem Komposthaufen entsorgt werden kann, wie in Fig. 8I schematisch angedeutet. Der Mantel 120 kann nun erneut eingesetzt werden.

Fig. 9A zeigt einen Verfahrensschritt, wobei eine zusammengesetzte Kapsel 101 in einer Vorrichtung 100 in umgekehrter Richtung eingesetzt wird. Zur Vereinfachung der Darstellung sind in Fig. 9A (wie in Fig. 8H) nur die wesentlichen Elemente des Aufnahmebereichs 105 der Vorrichtung 100 gezeigt, die sich im unmittelbaren Umfeld der zusammengesetzten Kapsel 101 befinden. Von einer Heisswasserversorgung wird heisses Wasser unter Druck in den Hohlraum oberhalb des Gebindes 130 eingepresst, wie durch einen Pfeil IN gezeigt. Die zusammengesetzte Kapsel 101 sitzt hier im Inneren einer Kapselaufnahme 110 (auch Kapselkäfig genannt). In Fig. 9A ist die Kapselaufnahme 110 durch einen fett dargestellten Linienzug repräsentiert. Die zusammengesetzte Kapsel 101 besitzt hier sowohl ein Dichtelement 140 als auch ein Dichtelement 150/151. Das Dichtelement 140 dichtet das Gebinde 130 gegenüber dem Mantel 120 ab. Das Dichtelement 150/151 erzeugt eine dichte Verbindung des Mantels 120 im Inneren der Kapselaufnahme 110. Hier braucht kein Siebelement zum Einsatz kommen. Unterhalb der zusammengesetzten Kapsel 101 kann z.B. ein Auslass 107 vorgesehen sein. Das Getränk tritt nun unterhalb aus, wie durch einen Pfeil gezeigt. Das eintretende Wasser ist mit IN und das austretende Wasser, d.h. das Getränk, mit OUT bezeichnet.

Der Auslass 107 kann zum Beispiel viele kleine Kanäle 148 umfassen, die ein Durchströmen des Getränks ermöglichen. Drei der genannten Kanäle 148 sind in Fig. 9B angedeutet. Fig. 9B zeigt eine schematisierte Darstellung eines Auslasses 107 bei dem ein Teil des Auslasses 107 im Schnitt dargestellt ist.

Fig. 9C zeigt einen schematisierte Darstellung eines weiteren Auslasses 107 bei dem ein Teil des Auslasses 107 im Schnitt dargestellt ist. Der Auslass 107 umfasst auch hier viele kleine Kanäle 148, die ein Durchströmen des Getränks ermöglichen. Um eine bessere Schaumbildung zu erzielen, kann der Auslass 107 mit optionalen Spitzen oder Nasen 157 versehen sein, wie in Fig. 9C angedeutet. Durch die in Fig. 9C gezeigte Konstellation kommt es zu einer besseren Verwirbelung des Getränks und somit zu der speziell beim Kaffee erwünschten Schaumbildung.

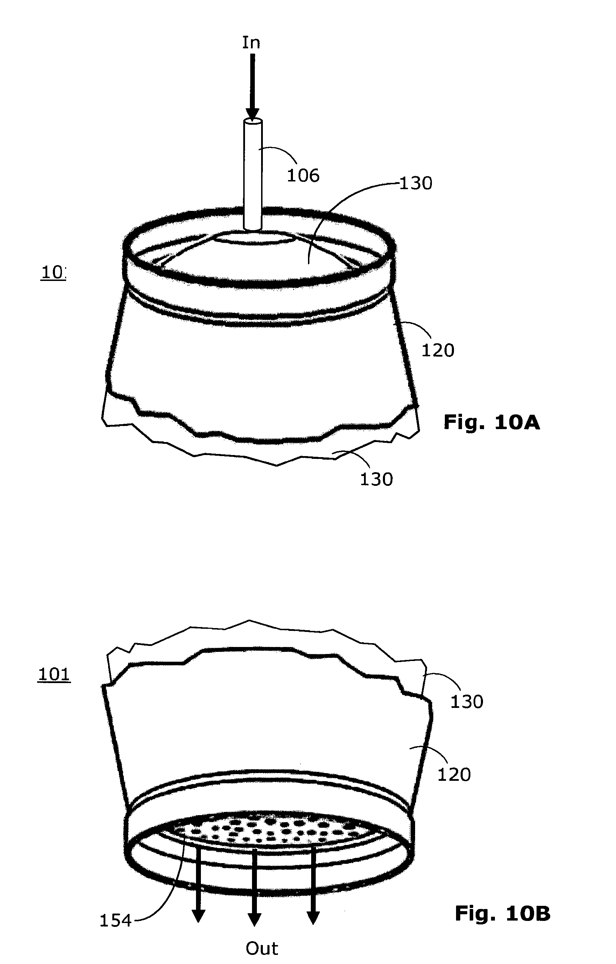

In Fig. 10A ist eine zusammengesetzte Kapsel 101 gezeigt, die hier einen Mantel 120 nach Fig. 2J umfasst. Es ist zu erkennen, wie sich der Bodenbereich des Gebindes 130 durch die bodenseitige Öffnung 124 des Mantels 120 hindurch erstreckt und einen kleinen Meniskus bildet. Im Bereich dieses Meniskus wurde das Gebinde 130 von einer Verbindungsleitung 106 durchstossen. Wasser wird durch die Verbindungsleitung 106 hindurch ins Innere des Gebindes 130 eingebracht.

In Fig. 10B ist eine andere zusammengesetzte Kapsel 101 gezeigt, die hier einen Mantel 120 umfasst, der ähnlich ausgelegt ist wie der Mantel 120 nach Fig. 2K. Es ist andeutungsweise zu erkennen, wie das Gebinde 130 im Inneren des Mantels 120 sitzt. Das Bilden eines Meniskus kann hier je nach Konstellation durch das Siebelement oder Netz 154 verhindert werden. Es kann aber auch die Position des Siebelements oder Netzes 154 so gewählt sein, dass sich trotzdem ein Meniskus ausbilden kann. Im Bereich dieses Siebelements oder Netzes 154 tritt das Getränk an verschiedenen Stellen aus, wie durch drei abwärts weisende Pfeile und die Beschriftung Out gekennzeichnet.

Der Gebinde 130 hat bei allen Ausführungsformen vorzugsweise eine Wandstärke, die zwischen 0,05 mm und 1,5 mm beträgt.

Vorzugsweise werden bei allen Ausführungsformen beim erwähnten kontrollierten Öffnen eine Reihe von kleinen Öffnungen (hier Perforierungen P genannt) in einem Bereich 132 des Gebindes 130 erzeugt, um beim Austreten des Getränks aus dem Gebinde 130 eine Verwirbelung und Schaumbildung zu unterstützen. Wie bereits erwähnt, ist es nicht zwingend erforderlich das Gebinde 130 zu perforieren. Das Gebinde 130 muss auch nicht in jedem Fall direkt mit einem Siebelement 103 der Vorrichtung 100 in Kontakt stehen.

Die Gebinde 130 können bei allen Ausführungsformen ohne Perforierung, mit einer Perforierung im Bereich 132 und/oder mit Perforierung im Bodenbereich 131 versehen sein. Die optionale Perforierung ist so gewählt, dass kein Pulver K durch die Perforierungsöffnungen austritt.

Bei allen Ausführungsformen können die Perforierung(en) beim Einsetzen in die Vorrichtung 100 erzeugt werden, oder es können vorhandene Perforierung(en) erweitert oder vergrössert werden, oder es wird komplett ohne Perforierungen gearbeitet.

Wie aus den beigefügten und beschriebenen Zeichnungen ersichtlich ist, sind mindestens zwei Varianten denkbar, wobei auch andere Varianten nicht ausgeschlossen sind.

Bei der ersten Variante wird das Gebinde 130 aus Filterpapier gebildet. Das Pulver K wird z.B. von einem (Kaffee-)Lieferanten vorgängig abgefüllt und das Gebinde 130 verschlossen (siehe z.B. Fig. 5C oder 5D).

Bei der zweiten Variante ist das Gebinde 130 aus dünnem Plastikmaterial gefertigt, auf das vorteilhafterweise eine sehr dünne Aluminiumschicht oder eine Siegelschicht aufgetragen ist oder abgeschieden wurde. Das Pulver K wird in diesem Gebinde 130 vorzugsweise vom (Kaffee-)Röster luft- und geruchsdicht abgepackt indem ein Deckel 133 aufgeschweißt oder mit Siegellack aufgeklebt wird.

Als weitere, nicht gezeigte Variante haben zum Beispiel bestehende Kapselanbieter die Möglichkeit, Gebinde 130 anzubieten, die dahingehend modifiziert wurden, dass sie die Aussenkontur entsprechend dem Mantel 120 anpassen. Somit lassen sich ihre Gebindekörper wesentlich dünner und umweltfreundlicher ausführen, da das Gebinde 130 seine Stabilität durch den Mantel 120 bekommt.

Allen Varianten gemeinsam ist der Umstand, dass wesentlich weniger und umweltfreundlicheres Material für die Gebinde 130 verwendet werden kann. Wohingegen sich der Mantel 120, wie beschrieben, praktisch endlos wiederverwenden lässt. Da die innen liegenden Gebinde 130 als Ganzes ausgestoßen werden und der Mantel 120 vorzugsweise über eine extrem glatte Oberfläche verfügt, ist das Reinigen dieses Mantels 120, wenn überhaupt erforderlich, problemlos möglich.

Dadurch, dass dieser Mantel 120 sehr günstig hergestellt werden kann, wird man vorteilhafterweise eine gewisse Anzahl Mäntel 120 in Reserve kaufen, so dass auch mehrere Tassen Kaffee nacheinander aufgebrüht werden können.

### Bezugszeichen:

- Kapselaufnahme: 1
- konventionelle Kaffeekapsel: 2
- Siebelement: 3

- Vorrichtung: 100
- zusammengesetzte Kaffeekapsel: 101

- Siebelement: 103
- Tank: 104
- (Heiss)Wasserversorgung: 104, 105
- Aufnahmebereich: 105
- Verbindungsleitung: 106
- Auslassbereich: 107
- Kapselaufnahme: 110

- Mantel: 120
- Bodenbereich: 121
- Öffnung: 122
- umlaufender Kragen: 123
- bodenseitige Öffnung: 124
- umlaufende Schulter: 125
- zylinderförmiger Abschnitt: 126
- zylinderförmiger Abschnitt: 127
- umlaufende Schulter: 128
- Bereich: 129
- Gebinde: 130
- Rand: 130.1
- Bodenbereich: 131
- Bereich: 132
- Deckel: 133
- Umlaufender Kragen: 134
- Oberer Endbereich: 135
- Stufe oder Kante: 135.1
- Verbindungsbereich: 136
- Öffnung: 137
- Lappen oder Falz: 138
- Taillierung, Strukturierung: 139
- umlaufendes Dichtelement: 140
- Kante: 141
- Gummidichtung oder -manschette oder -tülle: 142
- Umgebogenen Rand: 143
- Scheibe: 144
- Rand: 145

- Dichtelement: 146
- Wulst: 147
- Kanäle: 148
- konischen Teil: 149
- umlaufendes Dichtelement: 150
- elastischer Dichtungsring: 151
- Dichtungslippe oder -lamelle: 152
- umlaufende Sicke: 153
- Siebelement, Netz: 154
- abgerundete/angefaste Kante: 155
- Hohlraum: 156
- Spitzen oder Nasen: 157

- Zapfen / Finger: 160

- Durchmesser im Bodenbereich: D1
- Durchmesser vor Kragen: D2
- Grösster Durchmesser: D3
- Durchmesser im Bodenbereich: D4
- Durchmesser vor Kragen: D5
- Grösster Durchmesser: D6
- Durchmesser der Taillierung oder Strukturierung: D7

- 1. Ebene: E1
- 2. Ebene: E2
- Pulver: K
- Symmetrieachse: R

## Patentansprüche

1. Vorrichtung (100) zum Bereitstellen eines Getränks unter Einsatz einer Kapsel, die im Inneren Pulver (K) aufweist, wobei die Vorrichtung (100) eine solche Kapsel (101), einen Aufnahmebereich (105) zum Aufnehmen der Kapsel, eine Wasserversorgung (104, 106) und einen Auslassbereich (107) für das Getränk aufweist, wobei es sich bei der Kapsel um eine Kapsel (101) handelt, die aus einem Mantel (120) und einem separaten Gebinde (130) zusammengesetzt ist, wobei der Mantel (120)
- wieder verwendbar ist,
- in sich formstabil ist,
- beidseitig offen ist,
- als Adapter zur Aufnahme und zum Abgeben des Gebindes (130), und
- zum Einbringen in den Bereich (105) der Vorrichtung (100) ausgelegt ist,
und wobei das Gebinde (130)
- mit dem Pulver (K) befüllt ist,
- das Pulver (K) umschliesst, und
- in den Mantel (120) einbringbar ist, bevor der Mantel (120) zusammen mit dem Gebinde (130) in dem Aufnahmebereich (105) der Vorrichtung (100) aufgenommen wird, **dadurch gekennzeichnet, dass**
bei dem Einbringen des Gebindes (130) in den Mantel (120) das Gebinde (130) durch eine erste Öffnung des Mantels (120) hindurch ragt und einen abgesetzten oberen Endbereich (135) bildet.

2. Vorrichtung (100) nach Anspruch 1, **dadurch gekennzeichnet, dass** ein umlaufender Kragen im Bodenbereich des Mantels (120) als umlaufendes Dichtelement und/oder eine umlaufende Dichtung (140, 150) an der Aussenseite des Mantels (120) als umlaufendes Dichtelement dient.

3. Vorrichtung (100) nach Anspruch 1, **dadurch gekennzeichnet, dass** der Mantel (120) bereits vor dem Einbringen in den Aufnahmebereich (105) beidseitig offen ist.

4. Vorrichtung (100) nach Anspruch 3, **dadurch gekennzeichnet, dass** der beidseitig offene Mantel (120) eine bodenseitige kleine Öffnung (124) und einen gegenüberliegende grosse Öffnung (122) umfasst.

5. Vorrichtung (100) nach Anspruch 4, **dadurch gekennzeichnet, dass** sich ein Teil des Gebindes (130) nach dem Einbringen in den Mantel (120) durch die bodenseitige kleine Öffnung (124) des Mantel (120) hindurch in einen Hohlraum (156) der Vorrichtung (100) erstreckt, wobei das Gebinde (130) im Bereich der bodenseitigen kleinen Öffnung (124) vorzugsweise eine Wölbung aufweist.

6. Vorrichtung (100) nach einem der Ansprüche 1, 3 bis 5, **dadurch gekennzeichnet, dass** der Mantel (120) beim Einbringen in die Vorrichtung (100) mechanisch mit den Elementen der Vorrichtung (100) im Aufnahmebereich (105) in Wechselwirkung tritt und ein Hohlraum (156) gebildet wird durch den hindurch Wasser in das Gebinde (130) gelangen kann.

7. Vorrichtung (100) nach einem der Ansprüche 1, 3 bis 5, **dadurch gekennzeichnet, dass** der Mantel (120) eine Form und einen Aussendurchmesser hat, der an die Form und den Innendurchmesser des Aufnahmebereichs (105) der Vorrichtung (100) angepasst ist, wobei ein Hohlraum (156) gebildet wird durch den hindurch Wasser in das Gebinde (130) gelangen kann.

8. Vorrichtung (100) nach Anspruch 4 oder 5, **dadurch gekennzeichnet, dass** der Mantel (120) im Bodenbereich (121) durch die bodenseitige kleine Öffnung (124) hindurch das Herstellen eines strömungstechnischen Kontakts der Wasserversorgung (104, 106) mit dem Gebinde (130) ermöglicht, wobei das Wasser von der Wasserversorgung (104, 106) aus durch den Hohlraum (156) hindurch in das Gebinde (130) gelangen kann.

9. Vorrichtung (100) nach Anspruch 1 oder 3, **dadurch gekennzeichnet, dass** der Mantel (120) eine Öffnung (122) aufweist, um das Herstellen eines Kontakts zwischen einem Siebelement (103; 107) der Vorrichtung (100) und dem Gebinde (130) zu ermöglichen.

10. Vorrichtung (100) nach Anspruch einem der Ansprüche 1, 3 bis 8, **dadurch gekennzeichnet, dass** der Mantel (120) eine konische Form hat und sich von unten nach oben verjüngt.

11. Vorrichtung (100) nach Anspruch einem der Ansprüche 1, 3 bis 8, **dadurch gekennzeichnet, dass** der Mantel (120) rotationssymmetrisch ausgelegt und vorzugsweise topf-, napf- oder tassenförmig ausgeführt ist.

12. Vorrichtung (100) nach einem der Ansprüche 1, 3 bis 11, **dadurch gekennzeichnet, dass** der Mantel (120) vorzugsweise Metall oder Kunststoff umfasst.

13. Vorrichtung (100) nach Anspruch 12, **dadurch gekennzeichnet, dass** das Gebinde (130)
- ein Gebinde (130) aus Filterpapier ist,
- ein Gebinde (130) aus beschichtetem Kunststoff ist,
- ein Gebinde (130) aus Blister-Folie oder einem Folienschlauch ist.

14. Kapsel zur Verwendung in einer Vorrichtung (100), die zum Bereitstellen eines Getränks ausgelegt ist, wobei die Kapsel eine Aussenform und Dimension hat, die an die Form einem Aufnahmebereichs (105) der Vorrichtung (100) angepasst ist, wobei es sich bei der Kapsel um eine Kapsel (101) handelt, die aus einem Mantel (120) und einem separaten Wegwerf-Gebinde (130) zusammengesetzt ist, wobei der Mantel (120) wieder verwendbar ist und als Adapter zur Aufnahme des separaten Gebindes (130) und zum Einbringen in den Aufnahmebereich (105) der Vorrichtung (100) ausgelegt ist, wobei der Mantel (120) formstabil und beidseitig offen ist, wobei das Gebinde (130) mit dem Pulver (K) befüllt ist und das Pulver (K) umschliesst, und wobei das Gebinde (130) während der Verwendung in der Vorrichtung (100) in dem Mantel (120) sitzt und nach der Verwendung aus dem Mantel (120) entnehmbar ist, **dadurch gekennzeichnet dass** bei dem Aufnehmen des Gebindes (130) in dem Mantel (120) das Gebinde (130) durch eine erste Öffnung des Mantels (120) hindurch ragt und einen abgesetzten oberen Endbereich (135) bildet.

15. Kapsel nach Anspruch 14 **dadurch gekennzeichnet, dass** ein umlaufender Kragen im Bodenbereich des Mantels (120) als umlaufendes Dichtelement und/oder eine umlaufende Dichtung (140, 150) an der Aussenseite des Mantels (120) als umlaufendes Dichtelement dient.

16. Kapsel nach Anspruch 14, **dadurch gekennzeichnet, dass** der Mantel (120) im Bodenbereich (121) eine erste Öffnung (124) und in einem gegenüberliegenden Bereich eine zweite Öffnung (122) aufweist.

17. Kapsel nach Anspruch 16, **dadurch gekennzeichnet, dass** sich ein Teil des Gebindes (130) nach dem Aufnehmen in dem Mantel (120) durch die erste Öffnung (124) des Mantel (120) hindurch erstreckt, wobei das Gebinde (130) im Bereich der ersten Öffnung (124) vorzugsweise eine Wölbung aufweist.

18. Kapsel nach Anspruch nach Anspruch 14, **dadurch gekennzeichnet, dass** der Mantel (120) eine konische Form hat und sich von unten nach oben verjüngt.

19. Kapsel nach Anspruch nach Anspruch 14, **dadurch gekennzeichnet, dass** der Mantel (120) rotationssymmetrisch ausgelegt und vorzugsweise topf-, napf- oder tassenförmig ausgeführt ist.

20. Kapsel nach Anspruch 14, **dadurch gekennzeichnet, dass** das Gebinde (130)
- ein Gebinde (130) aus Filterpapier ist,
- ein Gebinde (130) aus beschichtetem Kunststoff ist,
- ein Gebinde (130) aus Blister-Folie ist.

21. Verfahren zum Bereitstellen eines Getränks mit den folgenden Schritten:
- Bereitstellen eines Mantels (120), der formstabil, wieder verwendbar und beidseitig offen ist,
- Bereitstellen eines separaten Gebindes (130), wobei der Mantel (120) als Adapter zur Aufnahme des Gebindes (130) und zum Einbringen in einen Aufnahmebereich (105) einer Vorrichtung (100) ausgelegt ist, und wobei das Gebinde (130) mit dem Pulver (K) befüllt ist und das Pulver (K) umschliesst
- Einsetzen des Gebindes (130) in den Mantel (120), um so eine zusammengesetzte Kaffeekapsel (101) zu bilden, wobei bei dem Einsetzen des Gebindes (130) in den Mantel (120) das Gebinde (130) durch eine erste Öffnung des Mantels (120) hindurch ragt und einen abgesetzten oberen Endbereich (135) bildet,
- Einsetzen der zusammengesetzten Kaffeekapsel (101) in den Aufnahmebereich (105) der Vorrichtung (100),
- Einbringen von Wasser in einen Hohlraum (156) des Aufnahmebereichs (105) und durch eine erste Öffnung (122; 124) des Mantels (120) hindurch in einen Bereich (131; 132) des Gebindes (130), um das Wasser durch das Pulver (K) im Inneren des Gebindes (130) zu leiten,
- Entnehmen des Getränks durch eine zweite Öffnung (124; 122) des Mantels (120).

22. Verfahren nach Anspruch 21, **dadurch gekennzeichnet, dass** ein umlaufender Kragen im Bodenbereich des Mantels (120) als umlaufendes Dichtelement und/oder eine umlaufende Dichtung (140, 150) an der Aussenseite des Mantels (120) als umlaufendes Dichtelement dient.

23. Verfahren nach Anspruch 21, **dadurch gekennzeichnet, dass** beim Einsetzen des Gebindes (130) in den Mantel (120) sich das Gebinde (130) etwas durch die erste Öffnung (124) des Mantels (120) hindurch wölbt und sich in den Hohlraum (156) hinein erstreckt.

24. Verfahren nach Anspruch 21, **dadurch gekennzeichnet, dass** das Gebinde (130) manuell mit dem Pulver (K) befüllt und dann durch Zusammenfalten oder Einklappen verschlossen wird.

## Claims

1. Apparatus (100) for preparing a beverage by using a capsule filled with powder (K) in the inside, wherein said apparatus (100) comprises such capsule (101), a receiving portion (105) for receiving said capsule, a water supply (104, 106), and an output region (107) for the beverage, wherein said capsule is a capsule (101) comprising a shell (120) and a separate package (130), wherein said shell (120) is:
- recyclable,
- stable in form,
- opened double-sided,
- adapted to be used as adaptor for receiving and releasing said package (130), and
- adapted to be inserted into the portion (105) of the apparatus (100),
and wherein said package (130):
- is filled with said powder (K),
- encloses said powder (K), and
- is introducible into the shell (120) prior to introduction of the shell (120) along with said package (130) into the receiving portion (105) of the apparatus (100),
**characterized in that**
the package (130), in the course of introduction of the package (130) into the shell (120), projects through a first opening of said shell (120) and forms an offset upper end portion (135).

2. Apparatus (100) according to claim 1, **characterized in that**, in the bottom region of the shell (120), a surrounding collar acts as a surrounding sealing element, and/or a surrounding seal (140, 150) on the outside of the shell (120) acts as a surrounding sealing element.

3. Apparatus (100) according to claim 1, **characterized in that** the shell (120), prior to the introduction into the receiving portion (105), is opened double-sided.

4. Apparatus (100) according to claim 3, **characterized in that** the double-sided opened shell (120) comprises a bottom-sided small opening (124) and an opposite large opening (122).

5. Apparatus (100) according to claim 4, **characterized in that** a portion of the package (130), subsequent to the introduction into the shell (120), projects into a cavity (156) of the apparatus (100) through the bottom-sided small opening (124) of the shell (120), wherein the package (130) preferably comprises a bulge in a portion of the bottom-sided small opening (124).

6. Apparatus (100) according to one of claims 1, 3-5, **characterized in that** the shell (120), during introduction into the apparatus (100), mechanically interacts with elements of the apparatus (100) in the receiving portion (105), wherein a cavity (156) is formed, wherein water can flow into the package (130) via said cavity (156).

7. Apparatus (100) according to one of claims 1, 3-5, **characterized in that** the shell (120) comprises a shape and an outer diameter, which meets with the shape and the inner diameter of the receiving portion (105) of the apparatus (100), wherein a cavity (156) is formed, wherein water can flow into the package (130) via the cavity (156).

8. Apparatus (100) according to claim 4 or 5, **characterized in that** the shell (120), at the bottom (121) region, is adapted to provide a fluidic contact between the water supply (104, 106) and the package (130) via the bottom-sided small opening (124), wherein the water can flow from the water supply (104, 106) into the package (130) via the cavity (156).

9. Apparatus (100) according to claim 1 or 3, **characterized in that** the shell (120) comprises an opening (122), adapted to provide contact between a sieve element (103; 107) of the apparatus (100) and the package (130).

10. Apparatus (100) according to one of claims 1, 3-8, **characterized in that** the shell (120) is conical and is tapered from the bottom to the top.

11. Apparatus (100) according to one of claims 1, 3-8, **characterized in that** the shell (120) is rotationally symmetrical, and is preferably formed like a pan, a bowl or a cup.

12. Apparatus (100) according to one of claims 1, 3-11, **characterized in that** the shell (120) preferably comprises metal or plastic.

13. Apparatus (100) according to claim 12, **characterized in that** the package (130) is:
- a package (130) comprising filter paper,
- a package (130) comprising coated plastic,
- a package (130) comprising a blister packaging foil or a foil tube.

14. A capsule used in an apparatus (100) adapted to dispense a beverage, wherein the capsule is formed and dimensioned such to match with the shape of a receiving portion (105) of said apparatus (100), wherein said capsule is a capsule (101) comprising a shell (120) and a separate and disposable package (130), wherein said shell (120) is recyclable and is adapted to act as an adaptor for the reception of said separate package (130), and for the insertion into the receiving portion (105) of said apparatus (100), wherein said shell (120) is stable in form and is opened double-sided, wherein said package (130) is filled with the powder (K) and surrounds said powder (K), and wherein said package (130) is seated into the shell (120) during usage of that apparatus (100), and is disposable from said shell (120) subsequent to the usage, **characterized in that** said package (130), during reception of said package (130) into the shell (120), projects through a first opening of said shell (120) and forms an offset upper end region (135).

15. Capsule according to claim 14, **characterized in that**, at the bottom region of the shell (120), a surrounding collar acts as a surrounding sealing element, and/or a surrounding seal (140, 150) on the outside of the shell (120) acts as a surrounding sealing element.

16. Capsule according to claim 14, **characterized in that** the shell (120) comprises a first opening (124) in the bottom region (121), and comprises a second opening (122) in an opposite region.

17. Capsule according to claim 16, **characterized in that** a portion of the package (130) projects through a first opening (124) of the shell (120), subsequent to the reception into the shell (120), and wherein said package (130) preferably comprises a bulge in the region of the first opening (124).

18. Capsule according to claim 14, **characterized in that** the shell (120) is conical and is tapered from the bottom to the top.

19. Capsule according to claim 14, **characterized in that** the shell (120) is rotational symmetrical and is preferably formed like a pan, a bowl or a cup.

20. Capsule according to claim 14, **characterized in that** the package (130) is:
- a capsule (130) comprising filter paper,
- a capsule (130) comprising coated plastic,
- a package (130) comprising a blister package foil.

21. A method for providing a beverage, comprising the steps of:
- providing a shell (120), wherein that shell (120) is stable in form, recyclable and opened double-sided,
- providing a separate package (130), wherein said shell (120) is adapted to be used as an adaptor for receiving that package (130) and for reception into a receiving portion (105) of that apparatus (100), and wherein that package (130) is filled with powder (K) and surrounds that powder (K),
- inserting said package (130) into the shell (120), so as to form an assembled coffee capsule (101), wherein said package (130), during insertion of said package (130) into the shell (120), projects through a first opening of said shell (120) and forms an offset upper end region (135),
- inserting the assembled coffee capsule (101) into the receiving region (105) of the apparatus (100),
- supplying water into a cavity (156) of the receiving region (105) and through a first opening (122; 124) of the shell (120) into a region (131; 132) of the package (130), in order to allow the water flowing through the powder (K) in the interior of the package (130),
- extracting the beverage from a second opening (124; 122) of the shell (120).

22. A method according to claim 21, **characterized in that** a surrounding collar in the bottom region of the shell (120) acts as a surrounding sealing element, and/or a surrounding seal (140, 150) on the outside of the shell (120) acts as a surrounding sealing element.

23. A method according to claim 21, **characterized in that** the package (130), during insertion of the package (130) into the shell (120), slightly curves through the first opening (124) of the shell (120) and extends into the cavity (156).

24. The method according to claim 21, **characterized in that** the package (130) is filled manually with said powder (K) and is closed by means of folding or retracting, subsequently.

## Revendications

1. Dispositif (100) pour préparer une boisson à l'aide d'une capsule qui présente à l'intérieur de la poudre (K), le dispositif (100) présentant une capsule (101), une zone de logement (105) pour recevoir la capsule, un approvisionnement en eau (104, 106) et une zone de sortie (107) pour la boisson, la capsule étant une capsule (101) composée d'une enveloppe (120) et d'un emballage séparé (130), l'enveloppe (120) étant
- réutilisable,
- indéformable,
- ouverte des deux côtés,
- conçue comme adaptateur pour recevoir et distribuer l'emballage (130), et
- conçue pour être insérée dans la zone (105) du dispositif (100),
et l'emballage (130)
- étant rempli de poudre (K),
- renfermant la poudre (K), et
- pouvant être installé dans l'enveloppe (120) avant que l'enveloppe (120) soit installée avec l'emballage (130) dans la zone de logement (105) du dispositif (100), **caractérisé en ce que**
lorsque l'on introduit l'emballage (130) dans l'enveloppe (120), l'emballage (130) passe à travers une première ouverture de l'enveloppe (120) et forme une zone d'extrémité supérieure étagée (135).

2. Dispositif (100) selon la revendication 1, **caractérisé en ce qu'**un rebord circulaire dans la zone de fond de l'enveloppe (120) sert d'élément d'étanchéité circulaire et/ou de joint périphérique (140, 150) sur le côté extérieur de l'enveloppe (120).

3. Dispositif (100) selon la revendication 1, **caractérisé en ce que** l'enveloppe (120) est déjà ouverte des deux côtés avant d'être introduite dans la zone de logement (105).

4. Dispositif (100) selon la revendication 3, **caractérisé en ce que** l'enveloppe ouverte de chaque côté (120) comprend une petite ouverture côté fond (124) et une grande ouverture opposée (122).

5. Dispositif (100) selon la revendication 4, **caractérisé en ce qu'**une partie de l'emballage (130) s'étend, après l'insertion dans l'enveloppe (120), à travers la petite ouverture côté fond (124) de l'enveloppe (120) dans une cavité (156) du dispositif (100), l'emballage (130) présentant de préférence une courbure dans la zone de la petite ouverture côté fond (124).

6. Dispositif (100) selon l'une des revendications 1 et 3 à 5, **caractérisé en ce que** l'enveloppe (120), lors de l'insertion dans le dispositif (100), interagit mécaniquement avec les éléments du dispositif (100) dans la zone de logement (105) et **en ce qu'**il est formé une cavité (156) à travers laquelle l'eau peut atteindre l'emballage (130).

7. Dispositif (100) selon l'une des revendications 1 et 3 à 5, **caractérisé en ce que** l'enveloppe (120) a une forme et un diamètre extérieur adaptés à la forme et au diamètre intérieur de la zone de logement (105) du dispositif (100), une cavité (156) étant formée à travers laquelle l'eau peut parvenir à l'emballage (130).

8. Dispositif (100) selon la revendication 4 ou 5, **caractérisé en ce que** l'enveloppe (120) dans la zone de fond (121), par la petite ouverture côté fond (124), permet l'établissement d'un contact fluidique entre l'approvisionnement en eau (104, 106) et l'emballage (130), l'eau, depuis l'approvisionnement en eau (104, 106), pouvant atteindre l'emballage (130) par la cavité (156).

9. Dispositif (100) selon la revendication 1 ou 3, **caractérisé en ce que** l'enveloppe (120) présente une ouverture (122) pour permettre l'établissement d'un contact entre un élément de tamisage (103, 107) du dispositif (100) et l'emballage (130).

10. Dispositif (100) selon l'une des revendications 1 et 3 à 8, **caractérisé en ce que** l'enveloppe (120) a une forme conique et s'effile du bas vers le haut.

11. Dispositif (100) selon l'une des revendications 1 et 3 à 8, **caractérisé en ce que** l'enveloppe (120) est conçue symétrique en rotation et est réalisée de préférence sous la forme d'un pot, d'un bol ou d'une tasse.

12. Dispositif (100) selon l'une des revendications 1 et 3 à 11, **caractérisé en ce que** l'enveloppe (120) comprend de préférence du métal ou du plastique.

13. Dispositif (100) selon la revendication 12, **caractérisé en ce que** l'emballage (130)
- est un emballage (130) en papier filtre,
- est un emballage (130) en plastique enduit,
- est un emballage (130) en feuille blister ou en film tubulaire.

14. Capsule destinée à être utilisée dans un dispositif (100) conçu pour préparer une boisson, la capsule ayant une forme extérieure et des dimensions adaptées à la forme d'une zone de logement (105) du dispositif (100), la capsule étant une capsule (101) composée d'une enveloppe (120) et d'un emballage jetable séparé (130), l'enveloppe (120) étant réutilisable et étant conçue comme adaptateur pour recevoir l'emballage séparé (130) et pour être introduite dans la zone de logement (105) du dispositif (100), l'enveloppe (120) étant indéformable et ouverte de chaque côté, l'emballage (130) étant rempli de poudre (K) et renfermant la poudre (K), et l'emballage (130) étant logé dans l'enveloppe (120) pendant l'utilisation du dispositif (100) et pouvant être retiré de l'enveloppe (120) après utilisation, **caractérisée en ce que** lorsque l'on installe l'emballage (130) dans l'enveloppe (120), l'emballage (130) passe à travers une première ouverture de l'enveloppe (120) et forme une zone d'extrémité supérieure étagée (135).

15. Capsule selon la revendication 14, **caractérisée en ce qu'**un rebord circulaire dans la zone de fond de l'enveloppe (120) sert d'élément d'étanchéité circulaire et/ou de joint périphérique (140, 150) sur le côté extérieur de l'enveloppe (120).

16. Capsule selon la revendication 14, **caractérisée en ce que** l'enveloppe (120) dans la zone de fond (121) présente une première ouverture (124) et, dans la zone opposée, une deuxième ouverture (122).

17. Capsule selon la revendication 16, **caractérisée en ce qu'**une partie de l'emballage (130), après insertion dans l'enveloppe (120), passe à travers la première ouverture (124) de l'enveloppe (120), l'emballage (130) présentant de préférence une courbure dans la zone de la première ouverture (124).

18. Capsule selon la revendication 14, **caractérisée en ce que** l'enveloppe (120) a une forme conique et s'effile du bas vers le haut.

19. Capsule selon la revendication 14, **caractérisée en ce que** l'enveloppe (120) est conçue symétrique en rotation et est réalisée de préférence sous la forme d'un pot, d'un bol ou d'une tasse.

20. Capsule selon la revendication 14, **caractérisée en ce que** l'emballage (130),
- est un emballage (130) en papier filtre,
- est un emballage (130) en plastique enduit,
- est un emballage (130) en feuille blister.

21. Procédé pour préparer une boisson, lequel présente les étapes consistant à :
- préparer une enveloppe (120) qui est indéformable, réutilisable et ouverte de chaque côté,
- préparer un emballage séparé (130), l'enveloppe (120) étant réalisée comme adaptateur pour recevoir l'emballage (130) et pour être insérée dans une zone de logement (105) du dispositif (100), et l'emballage (130) étant rempli de poudre (K) et renfermant la poudre (K),
- insérer l'emballage (130) dans l'enveloppe (120) pour ainsi former une capsule de café (101), dans lequel, lorsque l'on introduit l'emballage (130) dans l'enveloppe (120), l'emballage (130) passe à travers une première ouverture de l'enveloppe (120) et forme une zone d'extrémité supérieure étagée (135),
- insérer la capsule de café reconstituée (101) dans la zone de logement (105) du dispositif (100),
- amener de l'eau dans la cavité (156) de la zone de logement (105) et la faire passer à travers une première ouverture (122, 124) de l'enveloppe (120) dans une zone (131, 132) de l'emballage (130) pour guider l'eau à travers la poudre (K) à l'intérieur de l'emballage (130),
- prendre la boisson par une deuxième ouverture (124, 122) de l'enveloppe (120).

22. Procédé selon la revendication 21, **caractérisé en ce qu'**un rebord circulaire dans la zone de fond de l'enveloppe (120) sert d'élément d'étanchéité et/ou de joint périphérique (140, 150) sur le côté extérieur de l'enveloppe (120).

23. Procédé selon la revendication 21, **caractérisé en ce que**, lorsque l'on insère l'emballage (130) dans l'enveloppe (120), l'emballage (130) se bombe un peu à travers la première ouverture (124) de l'enveloppe (120) et s'étend dans la cavité (156).

24. Procédé selon la revendication 21, **caractérisé en ce que** l'emballage (130) est rempli manuellement de poudre (K) et est ensuite fermé par pliage ou par rabattement.
